# NEUE EUROPÄISCHE PATENTSCHRIFT

(11) **EP 1 737 648 B2**
(45) Veröffentlichungstag und Bekanntmachung des Hinweises auf die Entscheidung über den Einspruch: **20.07.2016**
(45) Hinweis auf die Patenterteilung: 06.01.2010
(21) Anmeldenummer: 05807746.2
(22) Anmeldetag: 14.10.2005
(51) Int. Cl.: B31B 19/84, B31B 19/64, B31B 23/00, B29C 65/74

(54) **VORRICHTUNG UND VERFAHREN ZUR HERSTELLUNG VON KUNSTSTOFFBEUTELN MIT PORTS**
DEVICE AND METHOD FOR THE PRODUCTION OF PLASTIC BAGS WITH PORTS
DISPOSITIF ET PROCEDE POUR LA PRODUCTION DE SACS PLASTIQUES MUNIS D'ELEMENTS DE FERMETURE

(30) Priorität: 15.10.2004 DE 102004050603; 22.10.2004 DE 102004051556
(43) Veröffentlichungstag der Anmeldung: 03.01.2007
(60) Teilanmeldung: 06015494.5
(73) Patentinhaber: PLÜMAT PLATE & LÜBECK GMBH & CO, 32339 Espelkamp (DE)
(72) Erfinder: PULLER, Stefan, 32339 Espelkamp (DE); MUTH, Friedrich, 32339 Espelkamp (DE)
(74) Vertreter: Harrison, Robert John
(86) Internationale Anmeldenummer: PCT/EP2005/011083
(87) Internationale Veröffentlichungsnummer: WO 2006/042710

(56) Entgegenhaltungen:
- EP-A- 0 539 800
- EP-B1- 0 724 516
- WO-A-2004/039562
- WO-A1-98/22350
- WO-A1-2004/039562
- WO-A2-2004/035444
- DE-A1- 1 486 977
- DE-A1- 1 486 977
- DE-C1- 19 752 648
- DE-C1- 19 752 648
- FR-A- 2 627 128
- US-A- 3 069 303
- US-A- 3 244 576
- US-A- 4 027 577
- US-A- 4 061 260
- US-A- 4 352 669
- US-A- 4 449 962
- US-A- 4 603 536
- US-A- 4 656 813
- US-A- 5 437 595
- US-A- 5 454 208
- PATENT ABSTRACTS OF JAPAN Bd. 2002, Nr. 02, 2. April 2002 (2002-04-02) -& JP 2001 269389 A (TERUMO CORP; NISSEI TECHNO KK), 2. Oktober 2001 (2001-10-02)

## Beschreibung

### Gebiet der Erfindung

Die vorliegende Erfindung liegt auf dem Gebiet der Kunststoffverarbeitung und der Anlagentechnik. Die vorliegende Erfindung betrifft eine Vorrichtung und ein Verfahren zur Herstellung von Kunststoffbeuteln mit einem oder mehreren Ports bzw. Kunststoffelementen.

### Hintergrund der Erfindung

Kunststoffbeutel, häufig in Form von Folienbeuteln, werden im Bereich der Medizin eingesetzt. Ihre Verwendungsmöglichkeiten sind vielfältig. Kunststoffbeutel können zur Aufnahme von Infusionslösungen dienen und werden unter anderem auch für die Aufbewahrung von Blut (Blutkonserven) und die Aufbewahrung von sterilen medizinischen Flüssigkeiten benutzt. Kunststoffbeutel benötigen Befüllungs- und Entnahmesysteme, die als sogenannte Ports ausgeführt sind, wobei die Kunststoffbeutel je nach Verwendungszweck ein, zwei oder mehrere Ports aufweisen können. Jeder Port kann, je nach vorgesehener Verwendungsart, eine spezielle Formgebung und/oder individuelle Konstruktionsbestandteile haben.

Kunststoffbeutel mit Ports sind z. B. aus den Schriften DE 196 34 944 C1 und DE 199 58 952 A1 bekannt. Dort werden Herstellungsverfahren beschrieben, bei denen ein einstückiges Einsatzstück aus Kunststoff in den Randbereich eines aus zwei übereinanderliegenden Kunststofffolien gebildeten Kunststoffbeutels eingeschweißt wird. Das Einsatzstück besteht aus einem massiven Stück Kunststoff von ausreichender Querschnittsgröße, sodass in dem Einsatzstück wahlweise ein, zwei oder mehrere Ports mit jeweils zylinderförmig kreisrundem Durchströmungsquerschnitt unterzubringen sind.

Kunststoffbeutel mit Ports sind auch aus der US-Patentschrift Nr. 3,244,576 bekannt. Diese Patentschrift beschreibt einen Port, der in der oberen Seite einer Kunststofffolie eingesetzt wird. Dabei wird ein Loch oder eine Öffnung in einer Kunststofffolie eingestampft und der Port darin gesetzt.

Ports können in Kunststoffbeuteln mit verschiedenen Arten von Kunststoffelementen realisiert werden. Kunststoffelemente können als extrudierte Schläuche, z.B. aus Polypropylen mit oder ohne eine innere Schicht aus EVA, ausgebildet sein. Kunststoffelemente können auch als Spritzgussteile, z.B. aus Polypropylen, ausgebildet sein.

Die Herstellung von Kunststoffbeuteln erfolgt in bekannter Weise mit einem Herstellungsverfahren, bei dem zwei miteinander zu verschweißende Kunststofffolien einem Schweiß/Schneidwerkzeug zugeführt werden, das ein- oder mehrnutzig sein kann, d.h. dessen Werkzeugform für ein oder mehrere Kunststoffbeutel ausgelegt sein kann. Die Zuführung der miteinander zu verschweißenden Kunststoff-Folien erfolgt in Form von planparallel übereinanderliegenden Endlos-Kunststofffolien, die üblicherweise als geblasener EndlosSchlauch ungeschnitten oderin Bahnen geschnitten von einer Rolle abgezogen und mittels Tänzerwalzen gestreckt gehalten werden, wobei durch bekannte Mittel (z. B. durch eine Folienklemme) sichergestellt ist, dass das Zuführungsende der Kunststofffolien lagegenau an der Eingangsseite des aus zwei Werkzeughälften gebildeten Schweiß/ Schneidwerkzeuges positioniert ist.

Sodann werden die Werkzeughälften auseinander gefahren und die Kunststofffolien werden durch das geöffnete Werkzeug hindurchgezogen Zu diesem Zweck greifen üblicherweise Vakuumsauger durch das geöffnete Werkzeug hindurch und erfassen das an der Eingangsseite des Werkzeuges lagegenau positionierte Zuführungsende der Kunststofffolien und ziehen dieses Zuführungsende bis auf die Ausgangsseite durch das geöffnete Werkzeug hindurch, woraufhin beim oder kurz nach dem Zufahren (Schließen) der Werkzeughälften die Schweißnähte zwischen den Kunststofffolien konturengenau entsprechend der Form des oder der Kunststoffbeutel hergestellt werden und zugleich mittels Trennmesser, die in das Schweiß/Schneidwerkzeug eingebaut sind, die Kunststoffbeutel freigeschnitten und von den noch frischen (unverschweißten) Kunststofffolien abgetrennt werden derart, dass ein neues Zuführungsende der Kunststofffolien an der Eingangsseite des SchweißSchneidwerkzeuges positioniert ist.

Aus der FR 2 627 128 ist eine Maschine und ein dazugehöriges Verfahren zur Herstellung von thermoschweißbaren Kunststoffbeuteln bekannt. Die Maschine verfügt über einen Folienspender und einen Spender für stutzenförmige Einsätze für die herzustellenden Beutel. Ferner hat die Maschine zwei Schweißwerkzeuge. Zunächst wird eine schlauchförmige Folie in zwei Folienbahnen geeigneter Größe geschnitten, bevor die longitudinalen Ränder in einem nächsten Schritt an dem ersten Schweißwerkzeug verschweißt werden. In einem weiteren, separaten zweiten Schweißwerkzeug und Arbeitsschritt werden anschließend die transversalen Ränder zur Bildung der Beutel verschweißt. Danach wird die geschweißte Folie über ein Transportsystem weitertransportiert und gekühlt, bevor die geschweißte Folie in einem weiteren Werkzeug in Beutel zertrennt wird. In diesem System wird die Folie; an der verschiedene Arbeitsschritte ausgeführt werden, kontinuierlich durch die Maschine gezogen, bevor sie an dessen Ende in einem separaten Arbeitschritt in Folienabschnitte zerteilt wird.

Eine weitere Vorrichtung und Verfahren zur Herstellung von beutelartigen Behältern ist aus derjapanischen Patentanmeldung Nr. 2001-269389 bekannt, welcher der Einsatz von Ports zwischen zwei Kunststofffolien durch Elektroverschweißen beschreibt.

Die EP 0 539 800 A2 beschreibt eine Vorrichtung und ein Verfahren zur kontinuierlichen Herstellung von beutelartigen Behältern aus einerschlauchförmigen Folie. Dabei wird ein erster "Schweißschritt" zum Verschweißen der Beutel und ein zweiter "Schweißschritt" zum Verschweißen des Ports beschrieben.

Die beschriebenen Herstellungsverfahren sind hinsichtlich der Details der Verfahrensabläufe und der dafür verwendeten Anlagen und Vorrichtungen vielfach optimiert worden. Jedoch ist es bisher nicht gelungen, eine wesentliche Leistungssteigerung bei derKunststoffbeutelherstellung zu erreichen. Die zeitlichen Abläufe der einzelnen Verfahrensschritte des Schweißens und des Schneidens sowie ein positionsgenaues Handling der fertigen Kunststoffbeutel und ggf. deren Befüllung und Versiegelung sowie gewünschtenfalls deren Einbringung in einen Umbeutel erschienen nicht veränderbar.

### Kurzfassung der Erfindung

Aufgabe der Erfindung ist es, eine verbesserte Herstellung von Kunststoffbeuteln durch neue oder verbesserte Verfahrensschritte und neue oder verbesserte Vorrichtungen zu erreichen.

Diese und weitere Aufgaben werden durch die vorliegende Erfindung gelöst.

Eine erfindungsgemäße Vorrichtung zur Herstellung von Kunststoffbeuteln aus Kunststofffolie umfasst einen oder mehrere Folienspender zur Bereitstellung von Kunststofffolien; einen oder mehrere Portspender zur Bereitstellung von Ports bzw. Kunststoffelementen; ein kombiniertes Schweiß/Schneidwerkzeug zum Anbringen der Kunststoffelemente an die Kunststofffolien zur Bildung von Ports, zum Zusammenschweißen der Kunststofffolien an einer Schweißform und zum Trennen der Kunststofffolien zur Bildung der Kunststoffbeutel; ein weiteres Schweißwerkzeug zum Nachschweißen der Ports; und eine Transferstation zur Übernahme der Kunststoffbeutel für die weitere Bearbeitung.

Eine Zusammenstellung von Folienspendern, Portspendern, kombiniertem Schweiß/Schneidwerkzeug und einer Transferstation in einer Vorrichtung vereinfacht das Herstellungsverfahren und erlaubt es, eine kompakte Vorrichtung zu erstellen.

In einer bevorzugten Ausführungsform der Vorrichtung ist die Kunststofffolie im kombinierten Schweiß/ Schneidwerkzeug im Wesentlichen horizontal. Eine derartige Anordnung der Vorrichtung erlaubt ein besonders einfaches Einbringen der Kunststofffolie in das kombinierte Schweiß/Schneidwerkzeug. Die Kunststofffolie kann bereits auf Grund der Schwerkraft flach auf dem kombinierten Schweiß/Schneidwerkzeug aufliegen.

Die Vorrichtung kann mit einer Vorwärmstation für die Kunststoffelemente ausgestattet werden. Durch eine Vorwärmstation für die Kunststoffelemente können die Kunststoffelemente bereits vor dem Schweißschritt auf eine erhöhte Temperatur gebracht werden. Dadurch kann das Verschweißen der Kunststoffelemente mit der Kunststofffolie erleichtert und beschleunigt werden und Temperaturspannungen können reduziert werden.

In einer bevorzugten Ausführungsform umfasst die Vorrichtung eine Folienbedruckeinheit. Mit der Folienbedruckeinheit können die Kunststofffolien bedruckt werden, sodass Informationen zu Inhaltsstoffen, Material der Kunststoffbeutel, Haltbarkeitsdatum der Kunststoffbeutel auf den Kunststoffbeuteln, usw. zur Verfügung gestellt werden können. Eine Folienbedruckeinheit kann beispielsweise nach dem einen oder den mehreren Folienspendern angeordnet sein.

Eine bevorzugte Ausführungsform der Vorrichtung zur Herstellung von Kunststoffbeuteln hat einen derartigen Aufbau, dass im kombinierten Schweiß/Schneidwerkzeug gleichzeitig jeweils zwei Kunststoffelemente an zwei Kunststoffbeutel angebracht werden.

Die Vorrichtung zur Herstellung von Kunststoffbeuteln kann für einen Durchlauf von zwei Kunststoffbeuteln mit jeweils zwei Kunststoffelementen optimiert werden. Eine derartige Ausgestaltung erlaubt einen kompakten Aufbau der Vorrichtung zur Herstellung von Kunststoffbeuteln bei gleichzeitig hohem Durchsatz.

Die Vorrichtung zur Herstellung von Kunststoffbeuteln kann eine Beutelfüllmaschine zur Befüllung mit einer Flüssigkeit umfassen. Durch eine Integration einer Beutelfüllmaschine in die Vorrichtung kann das Herstellungsverfahren weiter vereinfacht werden. Übergabe und Transport von gefertigten Kunststoffbeuteln aus der Vorrichtung heraus, die hygienisch, üblicherweise in einem Reinraum, erfolgen müssen, kann dadurch vermieden werden.

In einer bevorzugten Ausführungsform ist die Beutelfüllmaschine mit Befüllvorrichtungen für die Kunststoffbeutel, mit einem Druckausgleichsbehälter für die Flüssigkeit und mit einer Beutelverschlussstation ausgestattet. Durch den Druckausgleichsbehälter kann die Flüssigkeit konstant auf einem, eventuell erhöhten, Druck gehalten werden. Die Flüssigkeit kann durch Öffnen eines Ventils dosiert über die Befüllvorrichtungen in Kunststoffbeutel abgefüllt werden. Das Verschließen der Kunststoffbeutel mit einer Beutelverschlussstation im gleichen Reinraum kann den Beutelinhalt sauber halten. Das Verschließen kann z.B. durch Aufsetzen oder Aufschweißen einer Kappe auf einem Port erfolgen.

Nach der kombinierten Schweiß/Schneidstation kann eine Schwenkvorrichtung in die Vorrichtung zur Herstellung von Kunststoffbeuteln eingebracht werden. Die Schwenkvorrichtung kann die Kunststoffbeutel aus der horizontalen Lage in eine vertikale Lage drehen, die für das Befüllen der Kunststoffbeutel in der Befüllstation förderlich ist.

Die Vorrichtung zur Herstellung von Kunststoffbeuteln kann mit einer Umbeutelverpackungsmaschine ergänzt werden. In der Umbeutelverpackungsmaschine können die Kunststoffbeutel in eine Kunststoffhüllenfolie verpackt werden. Die Kunststoffhüllenfolie ist von einem oder mehreren zweiten Folienspendem bereitgestellt. Durch die Verpackung in den Umbeutel können die Kunststoffbeutel hygienisch sicher und geschützt transportiert und gelagert werden. Verschmutzungen der gefertigten Kunststoffbeutel, z.B. an den Ports, können verhindert werden.

Eine vereinfachte Vorrichtung zur Herstellung von Kunststoffbeuteln wird erreicht durch ein Schweißwerkzeug, welches eine ruhende, im Wesentlichen ebene, untere Schweißwerkzeugplatte und eine bewegliche, geformte, obere Schweißwerkzeugplatte umfasst. Ein derartiges Schweißwerkzeug erlaubt, dass eine Kunststofffolie leicht über die untere Schweißwerkzeugplatte gezogen werden kann. Die untere Schweißwerkzeugplatte soll insbesondere im Bereich, auf dem die Kunststofffolie aufliegt, eben sein. Eine ebene untere Schweißwerkzeugplatte ist fertigungstechnisch einfach und günstig herzustellen sowie leicht zu reinigen. Ruhende Teile erhöhen die Standzeit von Anlagen. Ruhende Teile können für die Konstruktion und Stabilisierung der gesamten Vorrichtung verwendet werden. Mit der beweglichen, geformten, oberen Schweißwerkzeugplatte können mehrere Lagen Kunststofffolie zusammengedrückt werden. DerSchweißbereich kann durch die Form der oberen Schweißwerkzeugplatte definiert werden. Durch die Formgebung der oberen Schweißwerkzeugplatte ist auch das Einschweißen von Ports in die Kunststoffbeutel möglich.

Ähnliche Vorteile ergeben sich durch ein Schneidwerkzeug, welches eine ruhende, im Wesentlichen ebene, untere Schneidwerkzeugplatte und eine bewegliche, geformte, obere Schneidwerkzeugplatte umfasst. Geformt bedeutet hierbei insbesondere, dass Messer oder andere Arten von Trennvorrichtungen an der oberen Schneidwerkzeugplatte vorhanden sind.

Durch ein kombiniertes Schweiß/Schneidwerkzeug, welches eine ruhende, im Wesentlichen ebene, untere Werkzeugplatte und eine bewegliche, geformte, obere Werkzeugplatte umfasst, wird die Vorrichtung zur Herstellung von Kunststoffbeuteln weiter vereinfacht. Nur noch ein Werkzeug ist notwendig für die Schritte des Verschweißens und des Trennens. Die Anzahl beweglicher Anlagenteile wird weiter reduziert. Die Anlagengröße kann verkleinert werden. Die Anlagenkosten können gesenkt werden, da nur noch ein Werkzeug zum Zusammenpressen der Kunststofffolien notwendig ist, das gleichzeitig dann die Kunststofffolien verschweißten und schneiden kann.

Vorteilhafterweise ist die untere Werkzeugplatte in einem kombinierten Schweiß/Schneidwerkzeug aus hartem oder gehärtetem Stahl gefertigt. Dadurch wird die Standzeit der Platte weiterhin erhöht, sodass die untere Werkzeugplatte nur selten ausgetauscht werden muss.

Vorteilhafterweise hat die untere Werkzeugplatte einen Einsatz in dem Bereich, in dem Kunststoffelemente an die Kunststoffbeutel angebracht werden. Der Einsatz kann separat beheizbar und austauschbar sein. Der Einsatz kann aus einem anderen Material als die untere Werkzeugplatte gefertigt sein. Der Einsatz kann eine Vertiefung zum Ausgleich der Höhe des Kunststoffelements beim Zusammenfahren des kombinierten Schweiß/Schneidwerkzeugs umfassen. Durch den Einsatz wird das Zusammendrücken der Kunststofffolien erleichtert. Die getrennte Temperaturregelung am Einsatz erleichtert das Anschweißen des Kunststoffelements an die Kunststoffbeutel. Der Einsatz kann auf eine höhere Temperatur als die untere Werkzeugplatte gebracht werden.

Die Standzeit der unteren Werkzeugplatte kann weiterhin durch ein weicheres Material im Bereich der oberen Werkzeugplatte insbesondere bei den Trennvorrichtungen erhöht werden. Die obere Werkzeugplatte wird dabei in einer Art und Weise angebracht, dass die gesamte obere Platte leicht ausgetauscht werden kann oder bevorzugterweise die Trennvorrichtungen leicht ausgetauscht werden können.

Bei einer Vorrichtung zur Herstellung von Kunststoffbeuteln kann der Schweißvorgang durch eine besondere Gestaltung eines Schweißwerkzeugs oder kombinierten Schweiß/Schneidwerkzeugs zur Verbindung zweier Lagen Kunststofffolie verbessert werden.

Das Schweißwerkzeug oder das kombinierte Schweiß/Schneidwerkzeug umfasst eine untere Schweißwerkzeugplatte oder untere Werkzeugplatte mit einer in Gebrauch ersten Temperatur und eine obere Schweißwerkzeugplatte oder obere Werkzeugplatte mit einer in Gebrauch zweiten Temperatur. Die erste Temperatur liegt unterhalb der Erweichtemperatur des Materials oder der Materialien der Kunststofffolien. Dadurch können die Kunststofffolien erwärmt werden, ohne mit der unteren Platte zu verkleben.

Die zweite Temperatur liegt zumindest in Teilbereichen der oberen Schweißwerkzeugplatte oder oberen Werkzeugplatte zumindest zeitweise oberhalb der Schmelztemperatur des Materials oder der Materialien der Kunststofffolien. Durch die zumindest zeitweise über die Schmelztemperatur des Materials der Kunststofffolie erhöhte zweite Temperatur wird die Verbindung der Lagen der Kunststofffolie erreicht.

In einer bevorzugten Ausführungsform wird die erste Temperatur im Wesentlichen zeitlich konstant gehalten. Eine konstante erste Temperatur ist leicht zu realisieren und es ist möglich ohne Regelungsproblematiken eine erste Temperatur kapp unterhalb der Erweichtemperatur des Materials der Kunststofffolie einzustellen.

Die erste Temperatur kann über wesentliche Bereiche der unteren Werkzeugplatte gleich eingestellt werden. Eine gleichförmige Erwärmung kann mit Standardheizelementen ohne Rücksicht auf die Form und Lage der gewünschten Schweißbereiche erfolgen. Eine andere Möglichkeit besteht darin nur Bereiche der unteren Werkzeugplatte zu erwärmen, in denen der Schweißvorgang erfolgen soll. Dies kann ein Verkleben der Kunststofffolie mit der unteren Werkzeugplatte weiter reduzieren. Die erste Temperatur kann auch zeitlich und örtlich im Wesentlichen konstant auf der unteren Werkzeugplatte eingestellt werden.

Die zweite Temperatur kann ebenfalls zeitlich konstant, oberhalb der Schmelztemperatur des verwendeten Materials für die Kunststofffolie, gehalten werden. Auch hierdurch ergibt sich eine vereinfachte Temperaturregelung. Die zweite Temperatur kann auch im Bereich der oberen Werkzeugplatte im Wesentlichen örtlich konstant gehalten werden. Aber auch hier können Bereiche, z.B. die Trennvorrichtungen bei kombinierten Schweiß/Schneidwerkzeugen, kühler, insbesondere unterhalb der Erweichtemperatur, gehalten werden.

Ein kombiniertes Schweiß/Schneidwerkzeug hat für die Durchführung eines erfindungsgemäßen Arbeitsverfahrens den Vorteil, dass das Greifsystem beim Hindurchziehen der Kunststofffolien durch das geöffnete Werkzeug im Werkzeug selbst eine konturenlose und ebene untere Werkzeugplatte vorfindet, die den Folientransport nicht behindert. Der Folientransport wird nicht durch Ankleben derKunststofffolie behindert, weil die untere Werkzeugplatte "kalt" ist. Unter dem Terminus "kalt" ist im Sinne der Erfindung zu verstehen, dass die untere Werkzeugplatte z.B. durch eine geeignete, oberflächennah eingebaute Temperaturerfassung und Temperaturführung in einem anderen Temperaturzustand gehalten ist als es dem Temperaturzustand der bis dato bekannten Schweißwerkzeuge entspricht. In der Praxis wurde bisher letztendlich immer eine Erweichung bzw. ein Anschmelzen der zu verarbeitenden Kunststofffolien in Kauf genommen haben. Bei der erfindungsgemäß "kalten" untere Werkzeugplatte wird das dadurch vermieden, dass der "kalte" Zustand der Oberfläche der unteren Werkzeugplatte weit genug unterhalb der Erweichtemperatur der zu verarbeitenden Kunststofffolien liegt, sodass die Kunststofffolien nicht an der unteren Werkzeugplatte anhaften können. Die Kunststofffolien liegen auf der unteren Werkzeugplatte formstabil und gut verschiebbar auf.

Durch die erreichte Formstabilität der Kunststofffolien auf der planen und"kalten" unteren Werkzeugplatte ist auch die Maßhaltigkeit der herzustellenden Kunststoffbeutel von hoher Genauigkeit.

Die Verfahrensschritte des Verschweißens, Schneidens oder ein kombinierter Schweiß/Schneidschritt können durch ein erfindungsgemäßes Transportsystem effizienter gestaltet werden. Das Transportsystem kann am geschlossenen Schneidwerkzeug, Schweißwerkzeug oder kombinierten Schneid/ Schweißwerkzeug vorbei geführt werden. Während der Vorgang des Schweißens oder Schneidens noch durchgeführt wird, kann die Kunststofffolie vor dem Schneidwerkzeug, Schweißwerkzeug oder kombinierten Schneid/Schweißwerkzeug vom Transportsystem ergriffen werden. Das Transportsystem kann eine oder mehrere Lagen Kunststofffolie in das geöffnete Schneidwerkzeug, Schweißwerkzeug oder kombinierten Schneid/ Schweißwerkzeug hineinziehen.

Bevorzugt ist das Transportsystem durch einen ersten und/oder einen zweiten Greifer ausgeführt, die seitlich am Schneidwerkzeug, Schweißwerkzeug oder kombinierten Schneid/Schweißwerkzeug vorbei geführt werden. Der erste Greifer und/oder der zweite Greifer können als mechanische Greifer ausgebildet sein, welche die eine oder mehrere Lagen Kunststofffolie ergreifen. Das Transportsystem ist auch mit Vakuumansaugern oder mit Walzen realisierbar.

In einer weiteren bevorzugten Ausführungsform sind die Schneidwerkzeuge, Schweißwerkzeuge oder kombinierten Schneid/Schweißwerkzeuge so mit Aussparungen versehen, dass der erste und der zweite Greifer die eine oder mehrere Lagen Kunststofffolien noch haltern kann, während sich die Schneidwerkzeuge, Schweißwerkzeuge oder kombinierten Schneid/ Schweißwerkzeuge schließen und geschlossen sind. Durch geeignetes Anbringen der Aussparungen und der ersten und/oder zweiten Greifer kann so die Kunststofffolie flach auf der unteren Schweißwerkzeugplatte, der unteren Schneidwerkzeugplatte oder der unteren Werkzeugplatte gehalten werden.

Das Fertigungsverfahren zur Herstellung von Kunststoffbeuteln kann durch Nester an einem Riemen an der Vorrichtung zur Herstellung von Kunststoffbeuteln weiterverbessertwerden. Die Nester nehmen die Kunststoffelemente auf und befördern die Nester zum. Schweißwerkzeug bzw. kombinierten Schweiß/Schneidwerkzeug. Die Kunststoffelemente bleiben während des Schweißschritts bzw. des Schweiß/Schneidschritts in den Nestern gehaltert. Die Kunststoffbeutel können nach dem Schweiß/Schneidschritt aus dem kombinierten Schweiß/Schneidwerkzeug mit den in den Nestern gehalterten Kunststoffelementen entnommen werden.

Für das Befüllen der Kunststoffbeutel wird in einer bevorzugten Ausführungsform eine Befüllstation für Kunststoffbeutel mit mindestens zwei Ports zur Verfügung gestellt. Um Probleme mit Tropfenbildungzu vermeiden und bei hoher Befiillgeschwindigkeit dennoch genügend genaue Dosierungen zu erreichen, werden Kunststoffbeutel mit mehreren Ports über mehrere Zuleitungen befüllt. Die Zuleitungen münden dabei erfindungsgemäß in einem Dosierventil und können durch einen Ventilstempel für eine gemeinsame Membran mehrerer Zuleitungen abgedichtet werden.

Ein verbessertes Verfahren zur Herstellung von Kunststoffbeuteln kann erreicht werden, indem Kunststofffolien aus einem odermehreren Folienspendern entnommen werden; Ports, welche von einem oder mehreren Portspendern bereitgestellt werden, in einem kombinierten Schweiß/Schneidewerkzeug an den Kunststoffbeuten angebracht werden; in einem kombinierten Schweiß/Schneidwerkzeug die Kunststofffolien an einer Kontur zusammengeschweißt werden; die Ports an einem weiteren Schweißwerkzeug nachgeschweißt werden; und die Kunststoffbeutel an einer Transferstation übernommen werden.

Vorteilhaft wird bei dem Verfahren die Kunststofffolie im Wesentlichen horizontal in das kombinierte Schweiß/Schneidwerkzeug eingeführt. Die horizontale Lage erleichtert die Handhabung der Kunststofffolie. Die Kunststofffolie kann von der Schwerkraft auf eine untere Werkzeugplatte gedrückt werden.

In einer bevorzugten Ausführungsform werden eine oder mehrere Kunststofffolie bedruckt. Durch ein Bedrucken der Kunststofffolie können wichtige Informationen, z.B. über Inhalt und Art des Kunststoffbeutels bereits bei der Kunststoffbeutelherstellung zur Verfügung gestellt werden.

Eine bevorzugte Ausgestaltung des Verfahrens positioniert jeweils zwei Kunststoffelemente an je zwei Kunststoffbeuteln so im kombinierten Schweiß/Schneidwerkzeug, dass durch das Zusammenschweißen und Schneiden zwei Kunststoffbeutel mit zwei Ports entstehen. Durch ein Verfahren zur Herstellung von jeweils zwei Kunststoffbeuteln wird ein effizienter Mittelweg zwischen einer kompakten Anlage und möglichem Durchsatz angegeben.

Im Verfahren zur Herstellung von Kunststoffbeuteln können die Kunststoffbeutel auch befülltwerden. Befüllt man die Kunststoffbeutel direkt im Herstellungsverfahren sind zeitraubende und möglicherweise verunreinigende Übergaben und Transporte zu anderen Herstellungsorten und Verarbeitungsmaschinen nicht notwendig.

Bevorzugterweise wird das Verfahren so durchgeführt, dass die Kunststoffbeutel verschlossen werden. Ein Verschließen der Kunststoffbeutel im Herstellungsverfahren vermeidet mögliche Verunreinigungen und weitere Übergabestationen zu weiteren Vorrichtungen.

In das Verfahren zur Herstellung von Kunststoffbeuteln kann auch die Verpackung der gefertigten und eventuell befüllen Kunststoffbeutel in einen Umbeutel integriert werden. Verpacken in Umbeutel reduziert mögliche Verschmutzungen der Kunststoffbeutel.

Die Erfindung umfasst ein Verfahren zur Herstellung von Kunststoffbeuteln, bei dem Kunststofffolien über eine ruhende, im Wesentlichen ebene, untere Schweißwerkzeugplatte eines Schweißwerkzeugs geführt werden. Eine bewegliche, geformte, obere Schweißwerkzeugplatte drückt für den Schweißvorgang von oben auf die Kunststofffolien. Auf einer ruhenden unteren Schweißwerkzeugplatte lassen sich Kunststofffolien gut positionieren und festhalten. Ähnliche Vorteile ergeben sich auch durch ein Schneidwerkzeug mit einer ruhenden, im Wesentlichen ebenen, unteren Schneidwerkzeugplatte, bei dem eine obere Schneidwerkzeugplatte von oben auf die Kunststofffolien drückt, um die Kunststofffolien zu durchtrennen.

Ein kombiniertes Schweiß/Schneidwerkzeug erlaubt neben den dargestellten Vorteilen für die Verfahrensführung weitere Vorteile indem z.B. keine erneute Positionierung von verschweißten Kunststoffbeuteln gegenüber einem Schneidwerkzeug vorgenommen werden muss.

Erfindungsgemäß ist auch ein Verfahren zur Herstellung von Kunststoffbeuteln, bei dem mehreren Lagen Kunststofffolie in einem kombinierten Schweiß/ Schneidwerkzeug über eine untere Werkzeugplatte mit einer ersten Temperatur unterhalb der Erweichtemperatur des Materials der Kunststofffolie geführt werden. Eine obere Werkzeugplatte mit einer zweiten Temperatur liefert dann zumindest örtlich und innerhalb ausreichender Zeit die notwendige Wärme zum Verschmelzen der Kunststofffolien.

Vorteilhaft wird die erste Temperatur im Bereich der unteren Werkzeugplatte konstant gehalten und die zweite Temperatur der oberen Werkzeugplatte zumindest in dem Bereich der oberen Werkzeugplatte, in dem die Kunststofffolien verschweißt werden sollen, konstant gehalten.

Der Verfahrensschritt des Schweißens, des Schneidens und/oder des kombinierten Schweißens und Schneidens kann durch ein Transportsystem mit Greifern verkürzt werden. Bevorzugterweise umfahren dabei ein erster Greifer und/oder ein zweiter Greifer das sich schließende, geschlossene und/oder sich öffnende Schweißwerkzeug, Schneidwerkzeug und/oder kombinierte Schweiß/Schneidwerkzeug. Der ersten Greifer und/oder der zweite Greifer ergreifen während des Schweißvorgangs, Schneidvorgangs und/oder kombinierten Schweiß/Schneidvorgangs die eine oder mehreren Lagen Kunststofffolie und ziehen die Kunststofffolie nach dem Öffnen des Schweißwerkzeugs, Schneidwerkzeugs und/oder kombinierten Schweiß/Schneidwerkzeugs in das Schweißwerkzeug, Schneidwerkzeug und/ oder kombinierte Schweiß/Schneidwerkzeug hinein. Dadurch wird die Taktzeit an verkürzt, da das Greifen bereits während des Schrittes erfolgt und nicht erst nach dem Schritt ein Greifer durch das Schweißwerkzeug, Schneidwerkzeug und/oder kombinierte Schweiß/ Schneidwerkzeug hindurchgefahren wird. Ein solches Greifsystem kann mittels einer Parallelführung für mechanische Greifer seitlich neben dem Schweißwerkzeug, Schneidwerkzeug und/oder kombinierte Schweiß/ Schneidwerkzeug ausgeführt werden.

Erfindungsgemäß können deshalb zur Verbesserung des Verfahrens folgende Arbeitsgänge und Verfahrensabläufe zeitgleich und mit sehr kurzen Wegen in ein- und derselben Arbeitsstation der Vorrichtung zur Herstellung von Kunststoffbeuteln (die Arbeitsstation umfasst das Schweiß/Schneidwerkzeug und die parallel zum Werkzeug geführte Greifvorrichtung) durchgeführt werden: a) die konturengenaue Herstellung der Kunststoffbeutel-Schweißnähte und b) das Einschweißen eines Kunststoffelements sowie c) das Freischneiden der geschweißten Kunststoffbeutel aus der Fläche der Kunststofffolien und d) die passgenaue Abtrennung der Reststücke der verbrauchten Kunststofffolien von dem neuen Zuführungsende der noch frischen (unverschweißten) Kunststofffolien und e) das zeitverkürzende Vorbereiten des nächsten Arbeitstaktes, indem die Greifvorrichtung für den Kunststofffolientransport während der Durchführung derArbeitsgänge a) bis d) von der Ausgangsseite des Werkzeuges zur Eingangsseite des Werkzeuges reversiert.

Durch die zeit- und ortsgleiche Durchführung der vorgenannten Arbeitsgänge in nur einer Arbeitsstation der Kunststoffbeutelherstellungsmaschine an nureinem ruhenden Kunststofffolienstück werden auch Passungsprobleme vermieden, die sich bisher bei den nacheinander in verschiedenen Arbeitsstationen durchgeführten Arbeitsgängen ergeben haben, z.B. infolge Maschinentoleranzen und/oder Dehnungen der Kunststofffolien von einer Arbeitsstation zur nächsten Arbeitsstation.

In einer bevorzugten Ausrührungsform des Verfahrens halten der erste und/oder der zweite Greifer die eine oder mehreren Lagen Kunststofffolie während des Schließens des Schweißwerkzeugs, Schneidwerkzeugs und/oder kombinierten Schweiß/Schneidwerkzeugs. Dies kann z.B. durch Aussparungen am Schweißwerkzeug, Schneidwerkzeug und/oder kombinierte Schweiß/Schneidwerkzeug ermöglicht werden, wobei der erste und/oder der zweite Greifer in die Aussparungen eingefahren werden. Mit dieser Anordnung von erstem Greifer und/oder zweitem Greifer in den Werkzeugausnehmungen, d.h. noch innerhalb der äußeren Werkzeugabmessungen, werden die dem Werkzeug zugeführten Kunststofffolien optimaler genutzt. Die Kunststofffolientransportwege sind kleiner, und der Kunststofffolienverschnitt ist geringer.

Die beschriebene Vorrichtung und Verfahren kann durch den Fachmann entsprechend angepasst und ergänzt werden, wenn in das kombinierte Schweiß/ Schneidwerkzeug zusätzlich vor Beginn des Schweißvorganges mindestens ein verschweißbares Kunststoffelement (vorzugsweise als formstabiles Einsatzstück) eingelegt wird. Durch ein Kunststoffelement kann ein Port gebildet werden. Das Kunststoff-Einsatzstück wird im Bereich einer Außennaht des oder der herzustellenden Kunststoffbeutel mit den Kunststofffolien verschweißt wird.

Es gehört bereits zum Stand der Technik, bei bekannten Kunststoffbeutelherstellungsverfahren zusätzlich auch ein Kunststoffelement zur Bildung eines Ports oder eines Schlauchansatzstückes in einer Außennaht der herzustellenden Kunststoffbeutel mit einzuschweißen. Ein solches Kunststoff-Einsatzstück ist meist ein formstabiles Einsatzstück oder ein in eine stabile Ausgangsform zurückfederndes Einsatzstück.

Bisher war es im Stand der Technik üblich, für das weitere Handling und den Weitertransport der fertiggeschweißten Kunststoffbeutel bis hin zu einer Befüllstation und dem Verschließen der Befüllöffnungen mindestens eine Übergabe-Station vorzusehen. Vakuumsauger entnehmen dabei die fertig geschweißten Kunststoffbeutel aus dem Schweiß/Schneidwerkzeug. Die Kunststoffbeutel werden dann an eine mitfahrende Aufnahme- Greif- und Transporteinheit übergeben, wodurch Übergabe-Ungenauigkeiten entstehen können, die zu einer ungenauen Positionierung der Kunststoffbeutel bzw. deren Befüllöffnungen in der Befüllstation führen können.

In einer bevorzugten Ausführungsform der Erfindung mit Nestern können derartige Positionierungsungenauigkeiten verringert werden. Die Kunststoffelemente werden in Nester eingelegt und in das kombinierte Schweiß/Schneidwerkzeug eingefahren. Der fertig geschweißte Kunststoffbeutel wird aus dem kombinierten Schweiß/Schneidwerkzeuges durch das Nest hinausgefahren.

Ein erfindungsgemäßer Verfahrensablauf, mit der Halterung der Kunststoffbeutel an den Kunststoffelementen, ermöglicht auch, dass die befüllten und verschlossenen Kunststoffbeutel mittels eines, vorzugsweise positionsgenau verfahrbaren drehwinkelgenau rotierbaren, Transportgreifers in einen flexiblen Kunststoff-Umbeutel eingebracht werden können. Dabei werden unrichtige Zuordnungspositionen zwischen dem bereits gefüllten und versiegelten Kunststoffbeutel und dem Kunststoff-Umbeutel vermieden, die bisher in der Praxis dazu geführt haben, dass beim Zuschweißen des Umbeutels der bereits gefüllte und versiegelte Kunststoffbeutel beschädigt worden ist.

### Beschreibung der Zeichnungen

Fig. 1 zeigt eine Skizze einer Ausführungsform einer Vorrichtung zur Herstellung von Kunststoffbeuteln;
Fig. 2 zeigt schematisch einen Kunststoffbeutel mit Port;
Fig. 3 zeigt schematisch ein Schweißwerkzeug;
Fig. 4 zeigt schematisch ein Schneidwerkzeug;
Fig. 5 a) und b) zeigen schematisch ein kombiniertes Schweiß/Schneidwerkzeug;
Fig. 6 a) bis d) zeigt schematisch den Verfahrensablauf beim Umfahren eines kombinierten Schweiß/ Schneidwerkzeugs durch einen ersten Greifer und einen zweiten Greifer;
Fig. 7, Nr. 1 bis 10, zeigt detailliert einen Fertigungsablauf an einem kombinierten Schweiß/Schneidwerkzeug;
Fig. 8 zeigt schematisch ein Dosierventil zur Befüllung von Kunststoffbeuteln;
Fig. 9 zeigt detailliert den Fertigungsablauf des Schwenkens der Kunststoffbeutel aus der Horizontalen in die Vertikale Lage nach dem Schweiß/ Schneidvorgang.

### Detaillierte Beschreibung der Erfindung

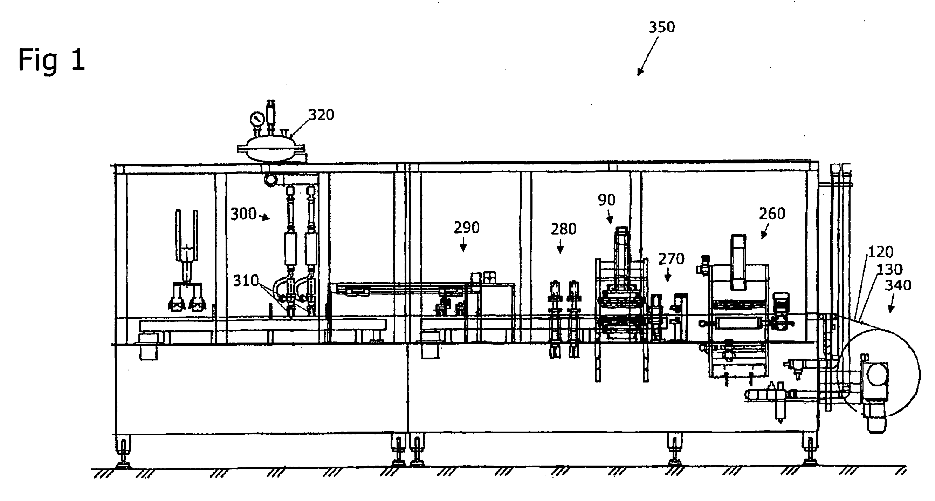

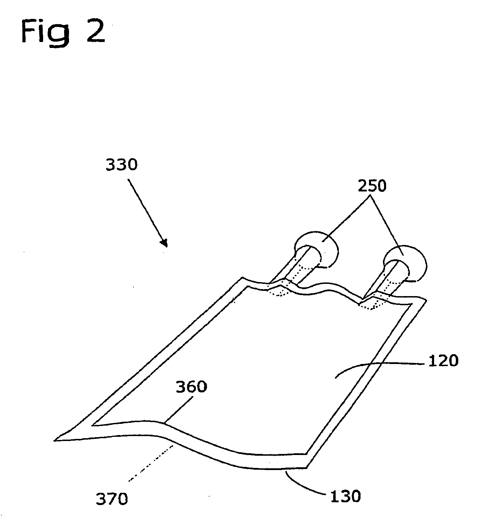

Fig. 1 zeigt beispielhaft eine Vorrichtung 350 zur Herstellung von Kunststoffbeuteln 330 sowie das damit verbundene Herstellungsverfahren. Ein Beispiel eines Kunststoff beutels 330 ist in Fig. 2 dargestellt. Weitere Figuren zeigen detaillierter einzelne Bestandteile und/ oder Verfahrensabläufe der Vorrichtung bzw. des Herstellungsverfahrens. Zwei Lagen einer Kunststofffolie 120, 130 werden von einem Folienspender 340 zur Verfügung gestellt. Die Kunststofffolien 120, 130 werden dabei von einer Trommel 342 abgerollt. Als Kunststofffolie 120, 130 kann z.B. eine dreischichtige Polypropylenfolie dienen.

Eine dreischichtige Polypropylenfolie kann aus Polypropylen und Kopolymeren gefertigt sein. Eine derartige dreischichtige Polypropylenfolie kann mit einer äußeren Schutzschicht, einer mittleren Barrierenschicht und einer inneren Schicht zum Verschweißen koextrüdiert werden. In der Vorrichtung 350 liegen die beiden inneren Schichten der beiden Kunststofffolien 120, 130 aufeinander und die zwei Lagen der Kunststofffolien 120, 130 sind zusammen auf der Trommel 342 aufgerollt.

Vom Folienspender 340 gelangen die Kunststofffolien 120, 130 zu einer Folienbedruckeinheit 260. in der Folienbedruckeinheit 260 werden auf die Kunststofffolien 120, 130 Informationen über das Material der Kunststofffolien 120,130, das Herstellungsdatum und Inhaltstoffe für die zu fertigenden Kunststoffbeutel 330 aufgedruckt.

Die zwei Lagen Kunststofffolie 120, 130 gelangen von der Folienbedruckeinheit 260 zum kombinierten Schweiß/Schneidwerkzeug 90. Ebenfalls in das kombinierte Schweiß/Schneidwerkzeug 90 werden Kunststoffelemente 250, die auf einem Nest 180 gehalten werden, eingebracht.

Mehrere der Nester 180 befinden sich fix auf einem Ersten Riemen und können mit dem Ersten Riemen befördert werden. Der Vorschub der Nester 180 ist zeitlich mit dem Takt des kombinierten Schweiß/ Schneidwerkzeugs 90 koordiniert. Während des Schweiß/Schneidschritts steht der Vorschub still. Eine Vorrichtung befüllt die Nester 180 mit Kunststoffelementen 250. Die Befüllung kann z.B. durch Hineindrücken in eine Passung in den Nestern 180 geschehen. Das Befüllen geschieht in der Stillstandsphase während eines Schweiß/Schneidschritts.

In einem der Nester 180 können eines oder mehrere Kunststoffelemente 250 gehalten werden. Im dargestellten Fall können zwei Kunststoffelemente 250 in dem Nest 180 gehalten werden. Die Kunststoffelemente 250 haben eine obere Position und eine untere Position, in der sie im Nest 180 gehalten werden können. Alternativ besteht die Möglichkeit, dass die Nester 180 selber oder Teile der Nester 180 eine obere Position und eine untere Position haben. Im Beispiel werden die Kunststoffelemente 250 in der oberen Position gehalten. In der oberen Position können die Nester 180 die Kunststoffelemente 250 über die untere Werkzeugplatte 100 des kombinierten Schweiß/Schneidwerkzeugs 90 führen. In der unteren Position der Kunststoffelemente 250 im Nest 180 kann das kombinierte Schweiß/Schneidwerkzeug 90 geschlossen werden.

Die Kunststoffelemente 250 durchlaufen vor dem kombinierten Schweiß/Schneidwerkzeug eine Vorwärmstation 270. Die Kunststoffelemente 250 befinden sich dabei auf den Nestern 180. In der Vorwärmstation 270 können die Kunststoffelemente 250 für einen verkürzten und verbesserten Schweißschritt im kombinierten Schweiß/Schneidwerkzeug 90 erwärmt werden. Das Verfahren wird so durchgeführt, dass sich während des Schneid/Schweißschritts die Kunststoffelemente 250, die an den nächsten Kunststoffbeuteln 330 im nächsten Schneid/Schweißschritt angebracht werden sollen in der Vorwärmstation 270 befinden. Die Vorwärmstation 270 ist so aufgebaut, dass vier Kunststoffelemente 250, die sich in zwei Nestern 180 befinden gleichzeitig erwärmt werden können.

Nach oder beim Öffnen des kombinierten Schweiß/Schneidwerkzeugs 90 wird der Vorschub des ersten Riemens wieder in Gang gesetzt. Die vier Kunststoffelemente 250 auf den zwei Nestern 180 werden in das kombinierte Schweiß/Schneidwerkzeug 90 eingebracht.

Im kombinierten Schweiß/Schneidwerkzeug 90 werden die Kunststoffelemente 250 mit einem Endbereich zwischen die zwei Lagen der Kunststofffolien 120, 130 einbebracht. In der dargestellten Ausführungsform der Erfindung werden vier Kunststoffelemente 250 zur Formung von vier Ports an zwei Kunststoffbeuteln 330 in das kombinierte Schweiß/Schneidwerkzeug 90 eingebracht. Die Kunststofffolien 120, 130 liegen weitgehend auf einer unteren Werkzeugplatte 100. Die ebene untere Werkzeugplatte 100 wird mit Heizelementen auf einer konstanten Temperatur von ungefähr 100 °C gehalten. Diese Temperatur liegt unterhalb der Erweichungstemperatur der Kunststofffolien 120, 130. Dadurch können die Kunststofffolien 120, 130 problemlos über die untere Werkzeugplatte 100 gleiten, ohne darauf "anzukleben". Die untere Werkzeugplatte 100 ist aus hartem und/oder gehärtetem Stahl gefertigt. Die untere Werkzeugplatte 100 ist auswechselbar und unbeweglich an der Vorrichtung 350 montiert.

In den Bereichen der unteren Werkzeugplatte 100, in denen die Kunststoffelemente 250 auf der unteren Kunststofffolie 130 aufliegen, befinden sich Einsätze 380 in der unteren Werkzeugplatte 100. Die Einsätze 380 haben eine Vertiefung, um beim Pressen der oberen Werkzeugplatte 110 auf die untere Werkzeugplatte 100 die Dicke der Kunststoffelemente 250 auszugleichen. Die Einsätze 380 haben eine von der restlichen unteren Werkzeugplatte 100 separat regelbare Heizung. In einer bevorzugten Ausführungsform nimmt ein Einsatz 380 mit zwei Vertiefungen 2 Kunststoffelemente 250 für einen Kunststoffbeutel 330 auf. Die separat regelbare Heizung hilft die Kunststoffelemente 250 an die Kunststofffolie 120,130, insbesondere an die untere Kunststofffolie 130, anzuschweißen. Mit der separat regelbaren Heizung können im Bereich der Einsätze 380 der unteren Werkzeugplatte 100 Temperaturen, z.B. 140 °C, oberhalb der Schmelztemperatur der verwendeten Materialien für die Kunststofffolien 120, 130 erzielt werden. Die Einsätze 380 in der unteren Werkzeugplatte 100 sind auswechselbar und unbeweglich an der Vorrichtung 350 montiert. Die Einsätze 380 können für andere Formen von Kunststoffbeuteln 330 ausgetauscht werden oder wegen Verschleiß ersetzt werden.

Die obere Werkzeugplatte 110 des kombinierten Schweiß/Schneidwerkzeugs 90 umfasst eine Stahlträgerplatte, auf der eine mit Schweißformen 40 geformte Aluminiumheizplatte 115 und Trennvorrichtungen, die eine Schneidform 80 bilden, montiert sind. Als Trennvorrichtungen dienen messerartige Stahlstücke, die die Kunststofffolien 120, 130 durchschneiden und so die Kunststoffbeutel 330 aus den Kunststofffolien 120, 130 ausschneiden. Die geformte Aluminiumheizplatte 115 hat eine schnelle Temperaturregelung, mit der Temperaturen, z.B. 140 °C, oberhalb des Schmelzpunktes der verwendeten Materialien der Kunststofffolien 120, 130 eingestellt und gehalten werden können. Die Aluminiumheizplatte 115 hat, wie die untere Werkzeugplatte 100, Vertiefungen in dem Bereich in dem sie beim Zusammenfahren des kombinierten Schweiß/Schneidwerkzeugs 90 auf die Kunststoffelemente 250 gedrückt wird.

Die Trennvorrichtungen, welche die Schneidform 80 bilden, sowie die geformte Aluminiumheizplatte 115 können ausgewechseltwerden. Durch Auswechseln der Trennvorrichtungen und der Aluminiumheizplatte 115 können unterschiedliche Formen von Kunststoffbeuteln hergestellt werden oderverschlissene Werkzeugteile ersetzt werden.

Die obere Werkzeugplatte 110 ist an der Vorrichtung 350 mit Pressvorrichtungen verbunden. Dadurch kann die obere Werkzeugplatte 110 auf die unbeweglich montierte untere Werkzeugplatte 100 gedrückt werden.

Beim Zusammendrücken werden die, durch die untere Werkzeugplatte 100 vorgewärmten, Kunststofffolien 120, 130 mit den in der Vorwärmstation 270 vorgewärmten Kunststoffelementen 250 durch die Wärmezufuhr in den Einsätzen 380 der unteren Werkzeugplatte 100 und der Aluminiumheizplatte 115 der oberen Werkzeugplatte 110 verschweißt und durch die Trennvorrichtungen entlang der Schneidform 40 geschnitten. Bei dieser Ausführungsform wird der Schneidvorgang nur teilweise durchgeführt. Die im Wesentlichen ausgeschnittenen Kunststoffbeutel 250 hängen noch mit den Überresten der Kunststofffolien 120, 130 zusammen. Die Kunststoffelemente 250 werden beim Zusammenfahren des kombinierten Schweiß/Schneidwerkzeugs 90 in die untere Position gedrückt. In der unteren Position befinden sich die Kunststoffelemente dann zumindest teilweise in der Vertiefung der Einsätze 380 der unteren Werkzeugplatte 100.

Die gefertigten Kunststoffbeutel 330 werden anschließend aus dem kombinierte Schweiß/Schneidwerkzeug 90 auf den Nestern 180 herausgezogen. Dazu werden die nun am Kunststoffbeutel 330 angebrachten Kunststoffelemente 250 wieder in die obere Position der Nester 180 gedrückt und der Vorschub des ersten Riemens wird betätigt. Zusammen mit den Nestern 180 werden die gehalterten Kunststoffelemente 250, wobei im Beispiel die zwei Kunststoffelemente 250, die mit einem Kunststoffbeutel 330 verbunden sind in einem Nest gehalten werden, und damit die Kunststoffbeutel 330 aus dem kombinierten Schweiß/Schneidwerkzeug 90 herausgezogen. Die Überreste der Kunststofffolien 120, 130, die noch mit den Kunststoffbeuteln 330 zumindest teilweise zusammenhängen, werden dabei ebenfalls aus dem kombinierten Schweiß/Schneidwerkzeug 90 herausgezogen.

Die gefertigten Kunststoffbeutel 330 werden an den Nestern einer Nachschweißstation 280 zugeführt. In der Nachschweißstation 280 wird die Verbindung der Kunststoffelemente 250 mit dem aus den Kunststofffolien 120, 130 gefertigten Kunststoffbeutel 330 nochmals erwärmt. Durch das nochmalige Erwärmen des Verbindungsbereichs der Kunststoffelemente 250 mit den Kunststoffbeuteln 330 wird der Verbindungsbereich weiter abgedichtet.

Während die Kunststoffbeutel 330 an den Nestern 180 gehalten werden, entfernt ein Entfernter die Überreste der Kunststofffolien 120, 130 und reißt diese von den Kunststoffbeuteln 330 ab. Das Entfernen kann z.B. mit einem dritten Greifer geschehen. Während der Stillstandspause eines Schweiß/Schneidschritts (d.h. der erste Riemen und damit die Nester 180 werden nicht bewegt) ergreift der dritte Greifer mit Greiffingern die Überreste der Kunststofffolien 120, 130 und reißt die Überreste von den an den Nestern 180 gehalterten Kunststoffbeuteln 330 ab.

In der beschriebenen Ausführungsform der Erfindung werden die Kunststoffbeutel 330 dann in einer Transferstation 290 aus den Nestern 180 herausgeschoben, aus der Horizontalen in die Vertikale geschwenkt und an weitere Nestern 185 übergeben. In den weiteren Nestern 185, die sich auf einem zweiten Riemen befinden, werden die Kunststoffbeutel 330 der Beutelfüllmaschine 300 zugeführt.

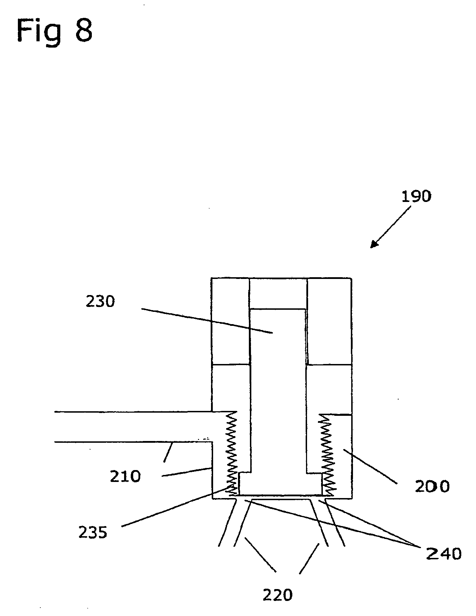

In der Befüllmaschine 300 werden Befüllvorrichtungen 310 auf oder über die Ports gesetzt und eine Flüssigkeit 200 kann in die Kunststoffbeutel 250 eingefülltwerden. In der beschriebenen Ausführungsform wird das Befüllen an beiden Ports eines Kunststoff beutels 330 gleichzeitig vorgenommen. Die Dosierung der Menge der Flüssigkeit 200 kann in einer Ausführungsform über eine Zeitsteuerung eines Dosierventils 190 (in Fig. 8 dargestellt) geschehen. Damit in gleichen Zeiträumen gleiche Mengen der Flüssigkeit 200 eingefüllt werden können, wird die Flüssigkeit 200 mit einem Druckausgleichsbehälter 320 auf konstantem Druck (zwischen 2 und 6 bar) gehalten. Alternativ zur Zeitsteuerung kann zwischen Druckausgleichstank und Dosierventil ein Massedurchflussmesssystem vorhanden sein. Das Massedurchflussmesssystem misst die Flüssigkeit und schließt das Dosierventil 190, sobald die gewünschte Menge der Flüssigkeit 200 in den Beutel eingefüllt ist. Mit diesem Massendurchflussmesssystem kann die Genauigkeit der Dosierung noch erhöht werden. Nach der Befüllung werden die Kunststoffbeutel 330, immer noch an den weiteren Nestern 180, einer Verschlussstation zugeführt. In der Verschlussstation können die Kunststoffbeutel 330 mit Kappen verschlossen werden. Der Verschluss mit Kappen kann durch Aufdrücken von Kappen mit Dichtungen vorgenommen werden. Alternativ ist auch eine Verschlussstation möglich, bei der Kappen auf die Kunststoffbeutel 330 aufgeschweißt werden.

In Fig. 2 ist ein Kunststoffbeutel 330 mit zwei durch Kunststoffelemente 250 gebildeten Ports dargestellt. Die Kunststoffelemente 250 sind zwischen zwei Lagen Kunststofffolie 120, 130 eingeschweißt. Ein solcher Kunststoffbeutel 330 kann Volumina zwischen typischerweise 100 ml und 3000 ml umfassen. Die innere Umrandung des Kunststoffbeutels 330 ist durch die Verschweißung des Kunststoffbeutels 330 definiert. Die äußere Umrandung ist durch das Schneiden des Kunststoffbeutels 330 definiert.

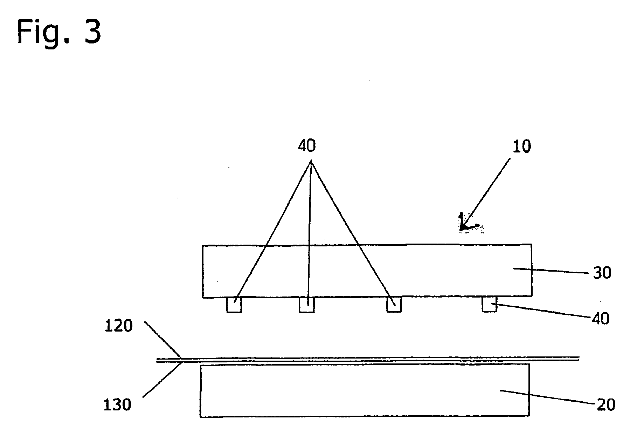

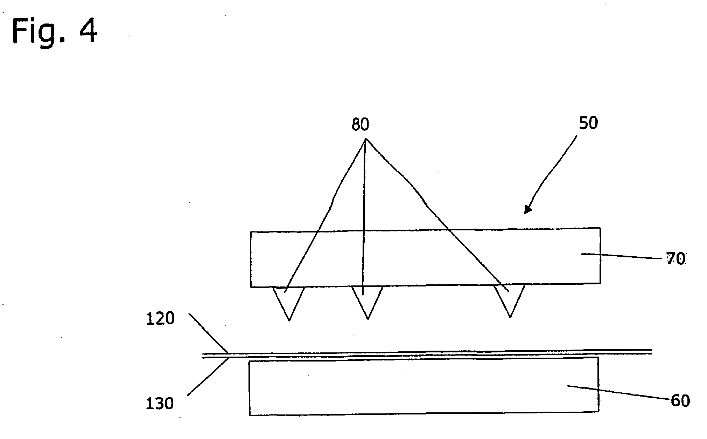

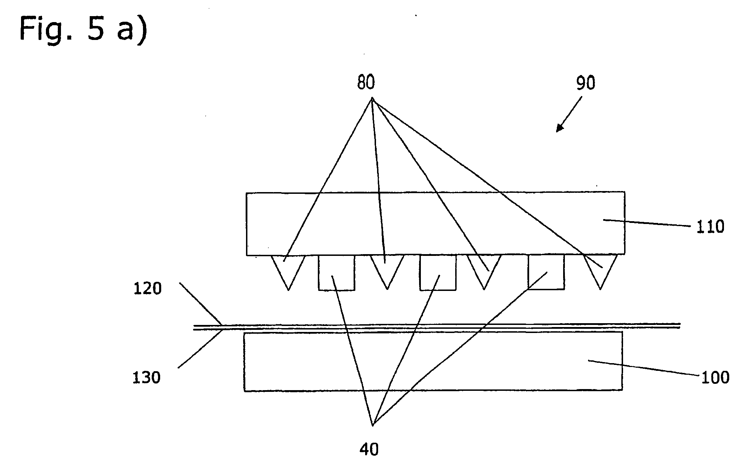

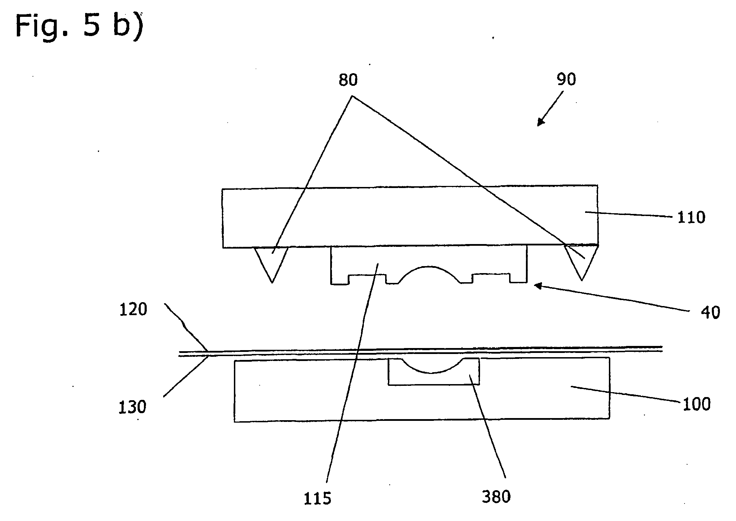

In Fig. 3, ist ein Schweißwerkzeug 10 und in Fig. 4 ist ein Schneidwerkzeug 50 für die Vorrichtung 350 zur Herstellung von Kunststoffbeuteln 330 dargestellt. In Fig. 5 a) und b) ist ein kombiniertes Schweiß/Schneidwerkzeug 90 für eine Vorrichtung 350 zur Herstellung von Kunststoffbeuteln 330 dargestellt. Alle drei Werkzeuge 10, 50, 90 haben jeweils eine untere ruhende Platte (die untere Schweißwerkzeugplatte 20, die untere Schneidwerkzeugplatte 60 und die untere Werkzeugplatte 100) sowie eine bewegbare, auf die untere ruhende Platte aufpressbare obere Platte (die obere Schweißwerkzeugplatte 30, die obere Schneidwerkzeugplatte 70 und die obere Werkzeugplatte 110). Im Folgenden werden bevorzugte Ausführungsformen des bevorzugten kombinierten Schweiß/Schneidwerkzeugs 90 beschrieben.

Die untere Werkzeugplatte 100 des kombinierten Schweiß/Schneidwerkzeugs 90 ist als ruhend an der Vorrichtung 350 angebrachte Platte aus gehärtetem Stahl gefertigt. Die untere Werkzeugplatte ist ungefähr 500 mm breit und 500 mm lang bei einer Dicke von ungefähr 10 mm. Die untere Werkzeugplatte 100 ist mit einer Heizvorrichtung, z.B. elektrische Heizschlangen ausgestattet sowie mit einem oder mehreren oberflächennahen Temperaturfühlern ausgestattet. Mit den Daten der Temperaturfühler kann die Heizung und somit dieTemperaturderunteren Werkzeugplatte 100 geregelt werden. Bevorzugterweise wird die Temperatur der unteren Werkzeugplatte 100 auf einen konstanten Wert eingestellt. In einer bevorzugten Ausführungsform umfasst die untere Werkzeugplatte 100 einen Einsatz 380 in einem Bereich, in dem Kunststoffelemente 250 an die Kunststoffbeutel 330 angeschweißt werden sollen. Dieser Einsatz 380 kann aus einem anderen Material wie die untere Werkzeugplatte 100 gefertigt sein, z.B. aus Aluminium. Der Einsatz 380 kann mit einer von der Heizung der unteren Werkzeugplatte 90 getrennten Heizung, Temperaturerfassung und Temperaturregelung ausgestattet sein. Der Einsatz 380 in Fig. 5 b) hat eine an das einzuschweißende Kunststoffelement 250 angepasste Vertiefung. Der Vertiefung steht eine entsprechende Vertiefung in der geformten oberen Werkzeugplatte gegenüber. Durch die Vertiefungen kann das kombinierte Schweiß/Schneidwerkzeug 90, trotz eines zwischenliegenden Anteils eines Kunststoffelements 250, so weit zusammengefahren werden, dass die Kunststofffolien 120, 130 zusammengedrückt werden.

Die geformte obere Werkzeugplatte 110 des kombinierten Schweiß/Schneidwerkzeugs 90 umfasst in Fig. 5 b) Trennvorrichtungen, die messerartig als Schneidform 80 ausgebildet sind. Diese Trennvorrichtungen sind bevorzugterweise abschraubbar an der oberen Werkzeugplatte 110 angebracht. Die Trennvorrichtungen können bei gewünschten geänderten Formen und/oder Größen von Kunststoffbeuteln 330 ausgetauschtwerden. Die Trennvorrichtungen können bei Verschleiß, z.B. Abstumpfen ausgetauscht werden. Auf die obere Werkzeugplatte ist in Fig. 5 b) eine Schweißform 40 angebracht. Die Schweißform 40 ist bevorzugt aus Aluminium gefertigt, um eine hohe Temperaturregelgeschwindigkeit zu ermöglichen. Die Schweißform 40 umfasst ein Heizsystem, z.B. elektrische Heizschlangen, und oberflächennahe Temperaturfühler. Bevorzugterweise ist eine schnelle Temperaturregelung für die obere Werkzeugplatte 110 möglich. Dadurch kann eine voreingestellte Temperatur auch beim Zusammenfahren der oberen Werkzeugplatte 110 auf die untere Werkzeugplatte 100 und dem dadurch entste henden Wärmeübergang bzw. den geänderten Temperaturabstrahlverhäftnissen gehalten werden.

In die Schweißform 40 sind Konturen eingearbeitet, entlangdererdieKunststofffolien 120, 130 zusammengeschweißt werden. Die Schweißform 40 hat eine zu der Vertiefung in dem Einsatz 380 in der unteren Werkzeugplatte 100 korrespondierende Vertiefung. Die Schweißform 40 ist bevorzugterweise auswechselbar, z.B. mit Schraubverbindungen, an der oberen Werkzeugplatte 110 angebracht.

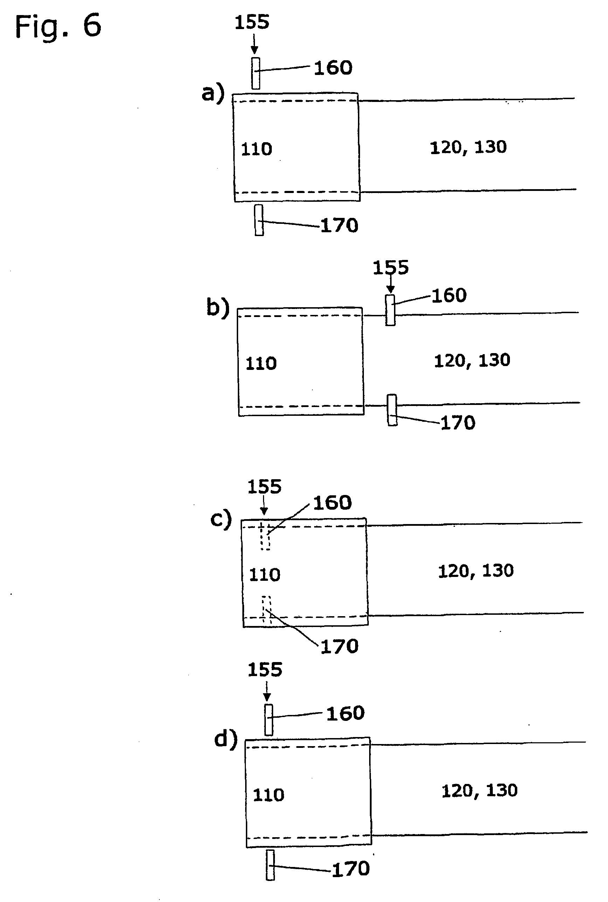

In Fig. 6 a) bis d) ist ein Schema abgebildet, das die Wirkung eines Greifsystems 155 zur Beschleunigung des Arbeitsablaufs an einem kombinierten Schweiß/Schneidwerkzeug 90 veranschaulicht. Das Schema stellt eine Sicht aus Vogelperspektive auf die obere Werkzeugplatte 110 dar.

In Fig. 6 a) ist der Zustand abgebildet, bei dem das kombinierte Schweiß/Schneidwerkzeug 90 für den Schweiß/Schneidvorgang zusammengedrückt ist und der erste Greifer 160 und der zweite Greifer 170 aus dem kombinierten Schweiß/Schneidwerkzeug 90 herausgefahren sind. Die zwei Lagen Kunststofffolie 120, 130 liegen zusammengedrückt im kombinierten Schweiß/ Schneidwerkzeug 90 und werden geschnitten und zusammengeschweißt.

In Fig. 6 b) ist der erste Greifer 160 und der zweite Greifer 170 um das kombinierte Schweiß/ Schneidwerkzeug 90 herumgeführt und greifen die Kunststofffolien 120, 130. Der Schritt des Herumführens um das kombinierte Schweiß/Schneidwerkzeug 90 geschieht noch während des Schweiß/Schneidvorgangs. Dadurch kann die Zeit bis zum erneuten Einlegen eines Kunststofffolienstücks verkürzt werden.

Nach Öffnen des kombinierten Schweiß/ Schneidwerkzeug 90, und Entnahme der geschnittenen und verschweißten Kunststoffbeutel, werden die Kunststofffolien 120, 130 von dem ersten Greifer 160 und dem zweiten Greifer 170 in das kombinierte Schweiß/ Schneidwerkzeug 90 hineingezogen. Die untere Werkzeugplatte 100 und die obere Werkzeugplatte 110 umfassen Aussparungen für den ersten Greifer 160 und den zweiten Greifer 170. Dadurch kann das kombinierte Schweiß/Schneidwerkzeug 90 geschlossen werden, während der erste Greifer 160 und der zweite Greifer 170 die Kunststofffolien 120, 130 haltern (Fig. 6 c).

Der erste Greifer 160 und der zweite Greifer 170 sind dann in Fig. 6 d) aus dem kombinierten Schweiß/ Schneidwerkzeug 90 herausgefahren, wodurch sich wieder die Ausgangssituation einstellt.

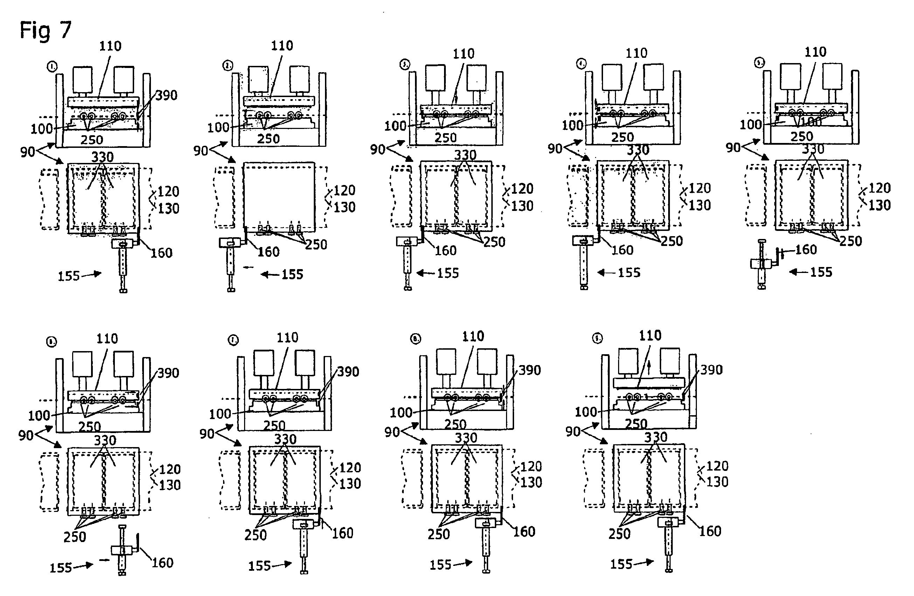

Fig. 7 Nr. 1 bis 10 zeigt detailliert den Verfahrensablauf beim kombinierten Schweiß/Schneidvorgang. Die einzelnen Arbeitsschritte werden jeweils von oben und von der Seite dargestellt.

In Nr. 1 ist das kombinierte Schweiß/Schneidwerkzeug 90 geöffnet, mit gefertigten Kunststoffbeuteln 330 gezeigt. Ein erster Greifer 160 befindet sich vor dem kombinierten Schweiß/Schneidwerkzeug und hat die zwei Lagen Kunststofffolie 120, 130 ergriffen.

In Nr. 2 ist nochmals das geöffnete kombinierte Schweiß/Schneidwerkzeug 90 dargestellt. Der erste Greifer 160 hat die zwei Lagen Kunststofffolie 120, 130 durch das kombinierte Schweiß/Schneidwerkzeug hindurchgezogen. Der erste Greifer 160 befindet sich am Ende des kombinierten Schweiß/Schneidwerkzeugs 90 und hält die zwei Lagen Kunststofffolie 120, 130 fest.

Nr. 3 zeigt das nun geschlossene kombinierte Schweiß/Schneidwerkzeug. Der erste Greifer 160 hält die Kunststofffolien 120, 130 nach wie vor fest. Der erste Greifer 160 befindet sich in einer Aussparung im kombinierten Schweiß/Schneidwerkzeug. Die Kunststofffolien 120, 130 werden durch das kombinierte Schweiß/ Schneidwerkzeug 90 zusammengedrückt.

Während der Schweiß/Schneidvorgang nun abläuft, wird der erste Greifer 160 in Nr. 4 geöffnet. In Nr. 5 wird der erste Greifer 160 aus dem kombinierten Schweiß/Schneidwerkzeug 90 herausgezogen und in Nr. 6 an den Anfang bzw. vor das kombinierte Schweiß/ Schneidwerkzeug 90 bewegt.

In Nr. 7 wird gezeigt, wie der nach wie vor geöffnete erste Greifer 160 wieder in Richtung des kombinierten Schweiß/Schneidwerkzeugs 90 hinfährt und die Kunststofffolien 120, 130 umgreift.

In Nr. 8 wird der erste Greifer 160 um die Kunststofffolien 120, 130 geschlossen.

In Nr. 9 wird das kombinierte Schweiß/Schneidwerkzeug 90 nach abgeschlossenem Schweiß/Schneidvorgang geöffnet. Die Kunststofffolien 120, 130 können dann nach Entnahme der gefertigten Kunststoffbeutel 330 sowie eventueller Überresten von Kunststofffolien 120, 130 wieder in das geöffnete kombinierte Schweiß/ Schneidwerkzeug 90 hineingezogen werden.

Der dargestellte erste Greifer 160 ist bevorzugterweise als mechanischer Greifer ausgebildet, der die Kunststofffolien zwischen zwei Fingern ergreift.

Die Bewegung des ersten Greifers 160 kann pneumatisch, hydraulisch oder mit Elektromotoren erfolgen. Die Bewegung des ersten Greifers 160 kann entlang einer Schiene erfolgen. Der zweite Greifer 170 ist ähnlich ausgebildet.

Bevorzugterweise werden die Überreste noch leicht zusammenhängend mit den gefertigten Kunststoffbeuteln 330 aus dem kombinierten Schweiß/Schneidwerkzeug 90 entnommen. Die Kunststoffbeuteln 330 werden dann außerhalb des kombinierten Schweiß/ Schneidwerkzeugs 90 von den Überresten getrennt. Die Trennung von Überresten und Kunststoffbeuteln 330 kann z.B. durch einen nichtdargestellten dritten Greifer geschehen. Der dritte Greifer ergreift die zusammenhängenden Überreste und reißt die Überreste von den auf den Nestern gehalterten Kunststoffbeuteln 330 ab.

Das in Fig. 8 abgebildete Dosierventil 190 für die Beutelfüllmaschine 300 umfasst einen Ventilstempel 230. Das Dosierventil 190 ist als Membranventil ausgebildet. Der Ventilstempel 230 drückt auf eine Membran 235. Die Membran 235 dichtet im geschlossenen Zustand des Dosierventils 190 zwei Leitungsöffnungen 240 ab. Der Raum 210 des Dosierventils 190 ist mit der zu dosierenden Flüssigkeit 200 gefüllt, die unter konstantem Druck zugegeben wird. Beim Öffnen des Dosierventils 190 strömt die Flüssigkeit 200 durch die beiden Leitungsöffnungen 240 in die beiden Zuleitungen 220. Die Flüssigkeit 200 strömt jeweils in eine Zuleitung 220 pro Port. Um das Abtropfen von Zuleitungen 220 zu vermeiden werden die Durchmesser der Zuleitungen 220 so gewählt, dass die Flüssigkeit 200 auf Grund ihrer Oberflächenspannung an der Zuleitung hängen bleiben kann. Dadurch wird ein oberer Durchmesser von ungefähr 5 mm festgelegt. Da die Zuleitungen der Reinigung zugänglich sein sollen ist der minimale Durchmesser auf ungefähr 1 mm beschränkt. Typische Innendurchmesser der Zuleitungen liegen bei ungefähr 3 mm. Größere Innendurchmesser lassen sich zwar realisieren, aber dann sind zur Vermeidung von Abtropfen Siebvorsätze notwendig. Siebvorsätze selber sind schlecht zu reinigen, müssen ausgewechselt werden und können die Flüssigkeit durch Bruchstücke des Siebes verunreinigen. Ein Dosierventil 190 wie in Fig. 8 hat eine Baugröße von ungefähr 60 mm Durchmesser bei einer Gesamtlänge von etwa 200 mm. Mehrere Dosierventile können zu einer Baugruppe zum gleichzeitigen Befüllen mehrerer Kunststoffbeutel kombiniert werden. Für den Antrieb des Dosierventils 190 stehen die bekannten Verfahren elektromagnetisch und/oder pneumatisch zur Verfügung. Die Dosierung aus dem Dosierventil 190 erfolgt bei konstantem Flüssigkeitsdruck über die Ausströmzeit, d.h. den Zeitraum in dem das Dosierventil 190 offen steht. Die erforderliche Ausströmzeit kann mittels eines Massedurchflusssystems bestimmt werden.

Vorteilhaft an der beschriebenen Ausführungsform des Dosierventils ist die Vermeidung von eventuell unterschiedlichen Schaltzeiten im Unterschied zu zwei Dosierventilen. Dadurch lassen sich Ungenauigkeiten vermeiden. Auch beim Sterilisieren der Vorrichtung 350 ergeben sich Vorteile. Bei zwei Dosierventilen könnte ein unbemerktes unvollständiges Öffnen eines der zwei Dosierventile zu einer unbemerkten unvollständigen Sterilisierung des unvollständig geöffneten Ventils führen. Mit der beschriebenen Anordnung kann so besser erreicht werden, dass der Dampfdurchgang bei der Sterilisierung alle Bereiche gleichermaßen erreicht.

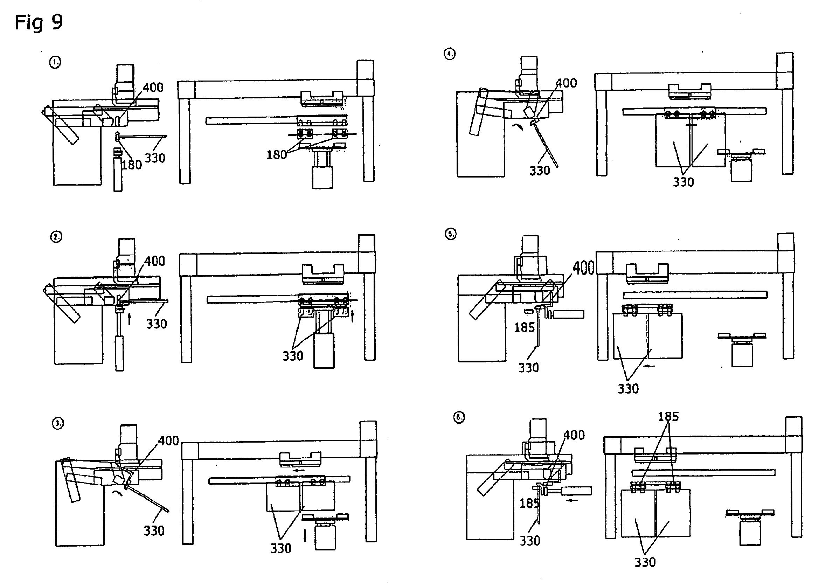

Fig. 9 Nr. 1 bis 6 zeigt den Vorgang des Schwenkens der Kunststoffbeutel 330 aus der horizontalen in die vertikale Lage mit den Ports der Kunststoffbeutel 330 nach oben. Die Drehung der Kunststoffbeutel 330 wird vor der Beutelfüllmaschine durchgeführt. Die Nr. 1 bis 6 zeigen den Vorgang jeweils in zwei Seitenansichten.

In Nr. 1 befinden sich zwei Kunststoffbeutel 330 in horizontaler Lage. Die Kunststoffbeutel sind durch die Nester 180 an den Kunststoffelementen 250 gehaltert.

Die Kunststoffbeutel 330 werden in Nr. 2. aus den Nestern 180 in einen Halter 400 geschoben.

In Nr. 3 werden die Halter 400, und damit auch die Kunststoffbeutel 330, geschwenkt. Das Schwenken der Halter 400 ist in Nr. 5 durchgeführt.

In Nr. 6 wird gezeigt, wie die Kunststoffbeutel 330 wieder aus den Haltern 400 auf ein weiteres Nester 185 herausgeschoben werden. Die weiteren Nester 185 sind an einem zweiten Riemen angebracht.

In der vertikalen Lage können die Kunststoffbeutel 330 dann an die Beutelbefüllmaschine 300 gebracht werden.

Dieses Verfahren zum Schwenken des Kunststoffbeutels 330 vermeidet die bisherige Verwendung eines Dorns, der in das Innere des Kunststoffelements hineingeschoben wurde. Dadurch könnten Verunreinigungen innerhalb des Kunststoffbeutels 330 entstehen.

### Bezugszeichenliste

- 10: Schweißwerkzeug
- 20: Untere Schweißwerkzeugplatte
- 30: Obere Schweißwerkzeugplatte
- 40: Schweißform
- 50: Schneidwerkzeug
- 60: Untere Schneidwerkzeugplatte
- 70: Obere Schneidwerkzeugplatte
- 80: Schneidform
- 90: Kombiniertes Schweiß/Schneidwerkzeug
- 100: Untere Werkzeugplatte
- 110: Obere Werkzeugplatte
- 115: Aluminiumheizplatte
- 120: Kunststofffolie
- 130: Kunststoffolie
- 140: Oberfläche der unteren Schneidwerkzeugplatte
- 150: Oberfläche der unteren Werkzeugplatte
- 155: Greifsystem
- 160: Erster Greifer
- 170: Zweiter Greifer
- 180: Nest
- 190: Dosierventil
- 200: Flüssigkeit
- 210: Raum des Dosierventils
- 220: Zuleitungen
- 230: Ventilstempel
- 235: Membran
- 240: Zuleitungsöffnungen
- 250: Kunststoffelement
- 260: Folienbedruckeinheit
- 270: Vorwärmstation
- 280: Nachschweißstation
- 290: Transferstation
- 300: Beutelfüllmaschine
- 310: Befüllvorrichtungen
- 320: Druckausgleichstank
- 330: Kunststoffbeutel
- 340: Folienspender
- 350: Vorrichtung zur Herstellung von Kunststoffbeuteln
- 360: Innere Umrandung
- 370: Äußere Umrandung
- 380: Einsatz
- 390: Finger
- 400: Halter

## Patentansprüche

1. Vorrichtung (350) zur Herstellung von Kunststoffbeuteln (330) aus Kunststofffolie (120, 130) mit
i.) einem oder mehreren Folienspendern (340) zur Bereitstellung von Kunststofffolien (120, 130);
ii.) einem oder mehreren Portspendern zur Bereitstellung von Kunststoffelementen (250);
iii.) einem kombinierten Schweiß/Schneidwerkzeug (90) zum
a) Anbringen der Kunststoffelemente (250) an die Kunststofffolien (120, 130) zur Bildung von Ports;
b) Zusammenschweißen der Kunststofffolien (120, 130) an einer beheizten Schweißform (40) und Verschweißen der Kunststofffolien (120, 130) mit den Kunststoffelementen (250); und
c) Trennen der Kunststofffolien (120, 130) zur Bildung der Kunststoffbeutel (330);
iv.) einem weiteren Schweißwerkzeug (280) zum Nachschweißen der Ports; und
v.) einer Transferstation (290) zur Übernahme der Kunststoffbeutel (330) für die weitere Bearbeitung.

2. Vorrichtung (350) zur Herstellung von Kunststoffbeuteln (330) nach Anspruch 1, wobei die Ausrichtung der Kunststofffolien (120, 130) im kombinierten Schweiß/Schneidwerkzeug (90) im Wesentlichen horizontal ist.

3. Vorrichtung (350) zur Herstellung von Kunststoffbeuteln (330) nach einem der Ansprüche 1 und 2, mit einer Vorwärmstation (270) für die Kunststoffelemente (250).

4. Vorrichtung (350) zur Herstellung von Kunststoffbeuteln (330) nach einem der Ansprüche 1 bis 3, wobei die Vorrichtung (350) eine Folienbedruckeinheit (260) umfasst.

5. Vorrichtung (350) zur Herstellung von Kunststoffbeuteln (330) nach einem der Ansprüche 1 bis 4, wobei das kombinierte Schweiß/Schneidwerkzeug (90) derart angeordnet ist, in einem Fertigungsschritt jeweils 2 Ports an 2 Kunststoffbeuteln (330) anzubringen.

6. Vorrichtung (350) zur Herstellung von Kunststoffbeuteln (330) nach einem der Ansprüche 1 bis 5 mit einer Beutelfüllmaschine (300) zur Befüllung der Kunststoffbeutel (330) mit einer Flüssigkeit (200).

7. Vorrichtung (350) zur Herstellung von Kunststoffbeuteln (330) nach Anspruch 6, wobei die Beutelfüllmaschine (300)
i.) eine oder mehrere Befüllvorrichtungen (310) für die Kunststoffbeutel (330);
ii.) einen Druckausgleichsbehälter (320) für die Flüssigkeit (200); und
iii.) eine Beutelverschlussstation
umfasst.

8. Vorrichtung (350) nach einem der Ansprüche 6 und 7, mit einer Schwenkvorrichtung, durch welche vor der Beutelfüllmaschine (300) die Kunststoffbeutel (330) mit den Ports nach oben gedreht werden können.

9. Vorrichtung (350) zur Herstellung von Kunststoffbeuteln (330) nach einem der Ansprüche 1 bis 8, mit einer Umbeutelverpackungsmaschine zur Verpackung der Kunststoffbeutel (330) in eine äußere Kunststoffhülle, wobei die Umbeutelverpackungsmaschine einen oder mehrere zweite Folienspender, zur Bereitstellung von Kunststoffhüllenfolie umfasst.

10. Vorrichtung (350) zur Herstellung von Kunststoffbeuteln (330) nach einem der Ansprüche 1 bis 9, wobei das kombinierte Schweiß/Schneidwerkzeug (90)
i.) eine ruhende, im Wesentlichen ebene untere Werkzeugplatte (100) und
ii.) eine bewegliche, geformte, obere Werkzeugplatte (110)
umfasst.

11. Vorrichtung (350) zur Herstellung von Kunststoffbeuteln (330) nach Anspruch 10, wobei die untere Werkzeugplatte (100) an der Oberfläche (140, 150) harten oder gehärteten Stahl umfasst.

12. Vorrichtung (350) zur Herstellung von Kunststoffbeuteln (330) nach einem der Ansprüche 10 und 11, wobei die untere Werkzeugplatte(100) einen oder mehrere Einsätze (380) umfasst.

13. Vorrichtung (350) zur Herstellung von Kunststoffbeuteln (330) nach Anspruch 12, wobei der eine oder die mehreren Einsätze (380) aus einem anderen Material als die untere Werkzeugplatte (100) gefertigt sind.

14. Vorrichtung (350) zur Herstellung von Kunststoffbeuteln (330) nach einem der Ansprüche 12 und 13, wobei die Einsätze (380) Aluminium als Material umfassen.

15. Vorrichtung (350) zur Herstellung von Kunststoffbeuteln (330) nach einem der Ansprüche 12 bis 14, wobei die Einsätze (380) eine von der unteren Werkzeugplatte (100) getrennte Heizung umfassen.

16. Vorrichtung (350) zur Herstellung von Kunststoffbeuteln (330) nach einem der Ansprüche 12 bis 15, wobei die Einsätze (380) in Gebrauch wärmer als die untere Werkzeugplatte (100) sind.

17. Vorrichtung (350) zur Herstellung von Kunststoffbeuteln (330)) nach einem der Ansprüche 10bis 15, wobei die obere Werkzeugplatte (110) der Vorrichtung (350) Trennvorrichtungen (80) für eine oder mehrere Lagen von Kunststofffolie (120, 130) umfasst, wobei die Trennvorrichtungen (80) weicher als die Oberfläche (140, 150) der unteren Werkzeugplatte (100) sind.

18. Vorrichtung (350) zur Herstellung von Kunststoffbeuteln (330) nach einem der Ansprüche 10 bis 17, wobei die obere Werkzeugplatte (110) eine Schweißform (40) umfasst.

19. Vorrichtung (350) zur Herstellung von Kunststoffbeuteln (330) nach Anspruch 18, wobei die Schweißform (40) aus Aluminium gefertigt ist.

20. Vorrichtung (350) zur Herstellung von Kunststoffbeuteln (330) nach einem der Ansprüche 18 und 19, wobei die Schweißform (40) eine Heizung umfasst.

21. Vorrichtung (350) zur Herstellung von Kunststoffbeuteln (330) nach einem der Ansprüche 17 bis 20, wobei die Trennvorrichtung (80) lösbar an der oberen Werkzeugplatte (110) angebracht ist.

22. Vorrichtung (350) zur Herstellung von Kunststoffbeuteln (330) nach einem der Ansprüche 1 bis 21 mit einem kombinierten Schweiß/Schneidwerkzeug (90) zum Trennen und Verbinden von einer oder mehreren Lagen Kunststofffolie (120, 130), wobei die Vorrichtung (350) ein Greifsystem (155) umfasst, wobei das Greifsystem (155)
i.) am geschlossenen kombinierten Schweiß/Schneidwerkzeug (90) vorbei geführt werden kann und
ii.) die eine oder mehreren Lagen Kunststofffolie (120, 130) in das geöffnete Schweiß/Schneidwerkzeug (90) hineinziehen kann.

23. Vorrichtung (350) zur Herstellung von Kunststoffbeuteln (330) nach Anspruch 22, wobei das Greifsystem (155) einen ersten Greifer (160) umfasst.

24. Vorrichtung (350) zur Herstellung von Kunststoffbeuteln (330) nach einem der Ansprüche 22 oder 23, wobei das Greifsystem (155) einen zweiten Greifer (170) umfasst.

25. Vorrichtung (350) zur Herstellung von Kunststoffbeuteln (330) nach einem der Ansprüche 22 oder 23, wobei der erste Greifer (160) auf einer Seite und/oder der zweite Greifer (170) auf einer anderen Seite des kombinierten Schweiß/Schneidwerkzeugs (90) vorbeigeführt wird.

26. Vorrichtung (350) zur Herstellung von Kunststoffbeuteln (330) nach einem der Ansprüche 22 bis 25, wobei der erste Greifer (160) und/oder der zweite Greifer (170) als mechanische Greifer ausgebildet sind, wobei die ersten Greifer (160) und die zweiter Greifer (170) eine oder mehrere Lagen Kunststofffolie (120, 130) ergreifen können.

27. Vorrichtung (350) zur Herstellung von Kunststoffbeuteln (330) nach einem der Ansprüche 22 bis 26, wobei das kombinierte Schweiß/Schneidwerkzeug (90) Aussparungen umfasst, derart dass das kombinierte Schweiß/Schneidwerkzeug (90) geschlossen werden kann während der erste Greifer (160) und/oder der zweite Greifer (170) die eine oder mehrere Lagen Kunststofffolien (120, 130) im inneren Bereich des kombinierten Schweiß/Schneidwerkzeugs (90) haltern.

28. Vorrichtung (350) zur Herstellung von Kunststoffbeuteln (330) nach einem der Ansprüche 1 bis 9, die Nester (180) umfasst, wobei die Nester (180)
i.) Kunststoffbeutel (330), die nach Durchlaufen einer oder mehrerer Lagen Kunststofffolie (120, 130) durch das kombinierte Schweiß/Schneidwerkzeug (90) gefertigt sind, haltern können und
ii.) die Vorrichtung (350) derart aufgebaut ist, dass die Nester (180) die gefertigten Kunststoffbeutel (330) bis zu einer Transferstation (290) haltern können.

29. Vorrichtung (350) zur Herstellung von Kunststoffbeuteln (330) nach Anspruch 28, wobei die
i.) Kunststoffbeutel (330) mit Ports versehen sind und
ii.) die Nester (180) derart angeordnet sind, dass sie die Kunststoffbeutel (330) im Bereich der Ports ergreifen können.

30. Vorrichtung (350) zur Herstellung von Kunststoffbeuteln (330) nach einem der Ansprüche 1 bis 9, wobei
i.) Kunststoffelemente (250) in Nester (180) eingebracht werden;
ii.) die Kunststoffelemente (250), in den Nestern (180) liegend, zum kombinierten Schweiß/Schneidwerkzeug (90) befördert werden;
iii.) die Kunststoffelemente (250) in den Nestern (180) während eines Schweiß/Schneidschritts verbleiben; und
iv.) an den Kunststoffelementen (250) angebrachte Kunststoffbeutel (330) mit den Nestern (180) aus dem kombinierten Schweiß/Schneidwerkzeug (90) herausgefahren werden.

31. Vorrichtung (350) zur Herstellung von Kunststoffbeuteln (330) nach einem der Ansprüche 1 bis 9, zusätzlich umfassend eine Befüllstation (300) zur Befüllung von Kunststoffbeuteln (330), welche mindestens zwei Ports umfassen, wobei die Befüllstation (300)
i.) ein Dosierventil (190) umfasst und
ii.) eine Flüssigkeit (200) unmittelbar aus dem Raum (210) des Dosierventils (190) auf Zuleitungen (220) zu den mindestens zwei Ports verteilt wird.

32. Vorrichtung (350) nach Anspruch 31, wobei das Dosierventil (190) eine Membran (235) aufweist, zum Verschließen aller Zuleitungsöffnungen (240) zu den Zuleitungen (220).

33. Vorrichtung (350) zur Herstellung von Kunststoffbeuteln (330) nach Anspruch 32, welche zwei Zuleitungen (220) für zwei Ports umfasst.

34. Kombiniertes Schweiß/Schneidwerkzeug (90) zur Herstellung von Kunststoffbeuteln (330) in einer Vorrichtung (350) nach einem der Ansprüche 1 bis 9, wobei das kombinierte Schweiß/Schneidwerkzeug (90)
i.) eine ruhende, im Wesentlichen ebene untere Werkzeugplatte (100),
ii.) eine bewegliche, geformte, obere Werkzeugplatte (110)
umfasst und
iii) eine Kunststofffolie (120, 130) in zwei Kunststoffbeuteln (330) trennt.

35. Verfahren zur Herstellung von Kunststoffbeuteln (330), wobei
i.) Kunststofffolien (120, 130) aus einem oder mehreren Folienspendern (340) entnommen werden;
ii.) Kunststoffelemente (250) von einem oder mehreren Portspendern bereitgestellt werden;
iii.) in einem kombinierten Schweiß/Schneidwerkzeug (90)
a) Kunststoffelemente (250) an die Kunststofffolien (120, 130) angebracht werden;
b) die Kunststofffolien (120, 130) an einer Kontur durch Wärmezufuhr zusammengeschweißt und die Kunststofffolien (120, 130) mit den Kunststoffelementen (250) verschweißt werden; und
c) die Kunststofffolien (120, 130) zusammen mit den Kunststoffelementen (250) getrennt werden;
iv.) die Kunststoffelemente (250) an einer Nachschweißstation (280) nachgeschweißt werden; und
v.) die Kunststoffbeutel (330) an einer Transferstation (290) übernommen werden.

36. Verfahren nach Anspruch 35, wobei die Kunststofffolie (120, 130) durch das kombinierte Schweiß/Schneidwerkzeug (90) im Wesentlichen horizontal eingeführt und/oder durch das kombinierte Schweiß/Schneidwerkzeug (90) durchgeführt wird.

37. Verfahren nach einem der Ansprüche 35 und 36, wobei die Kunststoffelemente (250) vor dem Anbringen an den Kunststoffbeuteln (330) im kombinierten Schweiß/Schneidwerkzeug (90) vorgewärmt werden.

38. Verfahren nach einem der Ansprüche 35 bis 37, wobei eine oder mehrere Kunststofffolien (120, 130) bedruckt werden.

39. Verfahren nach einem der Ansprüche 35 bis 38, wobei im kombinierten Schweiß/Schneidwerkzeug (90) jeweils 2 Kunststoffelemente (250) an 2 Kunststoffbeutel (330) angebracht werden.

40. Verfahren nach einem der Ansprüche 35 bis 39, wobei die Kunststoffbeutel (330) mit einer Flüssigkeit (200) befüllt werden.

41. Verfahren nach einem der Ansprüche 35 bis 40, wobei die Kunststoffbeutel (330) verschlossen werden.

42. Verfahren nach einem der Ansprüche 35 bis 41, wobei die Kunststoffbeutel (330) vor der Befüllstation (300) mit den Ports nach oben gedreht werden.

43. Verfahren nach einem der Ansprüche 35 bis 42, wobei die Kunststoffbeutel (330) in einen Umbeutel verpackt werden.

44. Verfahren zur Herstellung von Kunststoffbeuteln (330) nach einem der Ansprüche 35 bis 43, wobei Kunststofffolien (120, 130) über
i.) eine ruhende, im Wesentlichen ebene, untere Werkzeugplatte (100) eines kombinierten Schweiß/Schneidwerkzeugs (90) geführt werden und
ii.) eine bewegliche, geformte, obere Werkzeugplatte (110) für den Schneidvorgang von oben auf die Kunststofffolien (120, 130) drückt.

45. Verfahren zur Herstellung von Kunststoffbeuteln (330) nach einem der Ansprüche 35 bis 43, mit einem kombinierten Schweiß/Schneidwerkzeug (90), wobei zwei Lagen Kunststofffolie (120, 130), verbunden werden, indem eine obere Werkzeugplatte (110) und eine untere Werkzeugplatte (100) zusammengedrückt werden, wobei
i.) die untere Werkzeugplatte (100) mit einer in Gebrauch ersten Temperatur, die unterhalb der Erweichtemperatur des Materials oder der Materialien der Kunststofffolien (120, 130) liegt, gebracht wird und
ii.) die obere Werkzeugplatte (110) mit einer in Gebrauch zweiten Temperatur, die zumindest in Teilbereichen der oberen Werkzeugplatte (110) zumindest zeitweise oberhalb der Erweichtemperatur des Materials oder der Materialien der Kunststofffolien (120, 130) liegt, gebracht wird.

46. Verfahren zur Herstellung von Kunststoffbeuteln (330) nach Anspruch 45, wobei die erste Temperatur und/oder die zweite Temperatur während des Verfahrens im Wesentlichen konstant gehalten werden.

47. Verfahren zur Herstellung von Kunststoffbeuteln (330) nach Anspruch 46, wobei die erste Temperatur auf 90 °C bis 110 °C eingestellt wird.

48. Verfahren zur Herstellung von Kunststoffbeuteln (330) nach einem der Ansprüche 45 bis 47, wobei die zweite Temperatur auf 120 °C bis 140 °C eingestellt wird.

49. Verfahren zur Herstellung von Kunststoffbeuteln (330) nach einem der Ansprüche 45 bis 48, wobei die erste Temperatur auf ungefähr 100 °C eingestellt wird und die zweite Temperatur auf ungefähr 130 °C eingestellt wird.

50. Verfahren zur Herstellung von Kunststoffbeuteln (330) nach einem der Ansprüche 45 bis 49, bei dem ein Greifsystem (155) mit einem ersten Greifer (160) und/oder einem zweiten Greifer (170) an dem zumindest teilweise geschlossenen kombinierten Schweiß/Schneidwerkzeug (90) vorbeifährt, eine oder mehrere Lagen Kunststofffolien (120, 130) vor dem kombinierten Schweiß/Schneidwerkzeug (90) ergreift und nach Öffnen des kombinierten Schweiß/Schneidwerkzeugs (90) in das kombinierte Schweiß/Schneidwerkzeug (90) hineinführt.

## Claims

1. An apparatus (350) for manufacturing plastic bags (330) from plastic film (120, 130) with:
i.) one or more film dispensers (340) for providing plastic films (120, 130);
ii.) one or more port dispensers for providing plastic elements (250);
iii.) a combined welding/cutting tool (90) to
a) attach the plastic elements (250) to the plastic bags (330) for the formation of ports;
b) welding together the plastic films (120, 130) on a heated welding form (40) and welding the plastic films (120, 130) with the plastic element (250); and
c) cutting the plastic films (120, 130) for formation of the plastic bags (330);
iv.) a further welding tool (280) to re-weld the ports; and
v.) a transfer station (290) for receiving the plastic bags (330) for further processing.

2. The apparatus (350) for manufacturing plastic bags (330) according to claim 1, wherein an alignment of the plastic films (120, 130) is substantially horizontal in the combined welding/cutting tool (90).

3. The apparatus (350) for manufacturing of plastic bags (330) according to any one of claims 1 and 2, comprising a preheating station (270) for the plastic elements (250).

4. The apparatus (350) for manufacturing plastic bags (330) according to any one of claims 1 to 3, wherein the apparatus (350) comprises a film printing unit (260).

5. The apparatus (350) for manufacturing plastic bags (330) according to any one of claims 1 to 4, wherein the combined welding/cutting tool (90) is arranged to attach in a manufacturing step 2 ports to 2 plastic bags (330).

6. The apparatus (350) for manufacturing plastic bags (330) according to any one of claims 1 to 5, comprising a bag filling station (300) for filling the plastic bags (330) with a fluid (200).

7. The apparatus (350) for manufacturing plastic bags (330) according to claim 6, wherein the bag filling station (300) comprises:
i.) one or more filling apparatuses (310) for the plastic bags (330);
ii.) a surge tank (320) for the fluid (200); and
iii.) a bag sealing station.

8. The apparatus (350) for manufacturing plastic bags (330) according to any one of claims 6 and 7, with a pivoting apparatus which can turn the plastic bags (300) with the ports upwards before the gas filling station.

9. The apparatus (350) for manufacturing plastic bags (330) according to any one of claims 1 to 8, with an outer bag packing machine for packing the plastic bags (330) in an outer plastic sleeve, wherein the outer bag packing machine comprises one or more film dispensers (340) for providing a plastic sleeve film.

10. The apparatus (350) for manufacturing plastic bags (330) according to any one of claims 1 to 9, wherein the combined welding/cutting tool (90) comprises:
i.) a static essentially planar lower tool plate (100): and
ii.) a moveable, formed upper tool plate (110).

11. The apparatus (350) for manufacturing plastic bags (330) according to claim 10, wherein the lower tool plate (100) comprises hard or hardened steel at the surface (140, 150).

12. The apparatus (350) for manufacturing plastic bags (330) according to any one of claims 10 and 11, wherein the lower tool plate (100) comprises one or more inserts (380).

13. The apparatus (350) for manufacturing plastic bags (330) according to claim 12, wherein the one or more inserts (380) are made from a material different to the lower tool plate (100).

14. The apparatus (350) for manufacturing plastic bags (330) according to any one of claims 12 and 13, wherein the inserts (380) comprise aluminium material.

15. The apparatus (350) for manufacturing plastic bags (330) according to any one of claims 12 to 14, wherein the inserts (380) comprises a heater separated from the lower tool plate (100).

16. The apparatus (350) for manufacturing plastic bags (330) according to any one of claims 12 to 15, wherein the inserts (380), when in use are warmer than the lower tool plate (100).

17. The apparatus (350) for manufacturing plastic bags (330) according to any one of claims 10 to 15, wherein the upper tool plate (110) of the apparatus (350) comprises a separator (80) for one or more layers of plastic film (120, 130), wherein the separator (80) is softer than a surface of the lower tool plate (100).

18. The apparatus (350) for manufacturing plastic bags (330) according to any one of claims 10 to 17, wherein the upper tool plate (110) comprises a welding form (40).

19. The apparatus (350) for manufacturing plastic bags (330) according to claims 18, wherein the welding form (40) is made from aluminium.

20. The apparatus (350) for manufacturing plastic bags (330) according to any one of claims 18 and 19, wherein the welding form (40) comprises a heater.

21. The apparatus (350) for manufacturing plastic bags (330) according to any one of claims 17 to 20, wherein at least one of the separators (80) is detachably arranged on the upper tool plate (110).

22. The apparatus (350) for manufacturing plastic bags (330) according to any one of claims 1 to 21, with a combined welding/cutting tool (90) for separating and fusing of one or more layers of plastic film (120, 130), wherein the apparatus (350) comprises a grip system (155), the grip system (155):
i.) is guidable around the closed combined welding/cutting tool (90), and
ii.) the grip system (155) is adapted to pull the one or more layers of plastic films (120, 130) into the open combined welding/cutting tool (90).

23. The apparatus (350) for manufacturing plastic bags (330) according to claim 22, wherein the grip system (155) comprises a first gripper (160).

24. The apparatus (350) manufacturing plastic bags (330) according to any one of claims 22 or 23, wherein the grip system (155) comprises a second gripper (170).

25. The apparatus (350) for manufacturing plastic bags (330) according to any one of claims 22 or 23, wherein the first gripper (160) is guidable around one side of the combined welding/cutting tool (90) and/or the second gripper (170) is guidable around another side of the combined welding/cutting tool (90).

26. The apparatus (350) manufacturing plastic bags (330) according to any one of claims 22 to 25, wherein the first gripper (160) and/or the second gripper (170) are in the form of mechanical grippers, wherein the first gripper (160) and the second gripper (170) can grip one or more layers of plastic film (120, 130).

27. The apparatus (350) manufacturing plastic bags (330) according to any one of claims 22 to 26, wherein the combined welding/cutting tool (90) comprises recess', such that the combined welding/cutting tool (90) is closable while the first gripper (160) and/or the second gripper (170) are holding one or more layers of plastic film (120, 130) in an inner portion of the combined welding/cutting tool (90).

28. The apparatus (350) for manufacturing plastic bags (330) according to any one of claims 1 to 9, comprising a nest (180),
i.) wherein the nest (180) is adapted to hold plastic bags (330) being produced after passing one or more layers of plastic films (120, 130) through the combined welding/cutting tool (90), and
ii.) the apparatus (350) is in such a manner constructed, that the nest (180) can hold the produced plastics bags (330) to a transfer station (290).

29. The apparatus (350) for manufacturing plastic bags (330) according to claim 28, wherein the
i.) plastic bags (330) are provided with ports, and
ii.) the nest (180) is adapted such that the plastic bags (330) are grip-able in an area of the ports.

30. The apparatus (350) for manufacturing plastic bags (330) according to any one of claims 1 to 9, wherein
i.) plastic elements (250) become introduced in to the nest (180);
ii.) the plastic elements (250), lying in the nests (180), are carried to the combined welding/cutting tool (90);
iii.) the plastic elements (250) in the nests (180) remain in the nests (108) whilst a welding cutting step occurs; and
iv.) plastic bags (330) attached to the plastic elements (250) with the nest (180) are extendable to the combined welding/cutting tool (90).

31. The apparatus (350) for manufacturing plastic bags (330) according to any one of claims 1 to 9, further comprising a filling station (300) for filling plastic bags (330), comprising at least two ports, wherein the filling station (300)
i.) comprises a dosing valve (190), and
ii.) a fluid (200) is being distributed immediate from a space (210) of the dosing valve (190) into feed lines (220) to the at least two ports.

32. The apparatus (350) according to claim 31, wherein the dosing valve (190) has a membrane (235) for closing feed line opening (240) to the feed lines (240).

33. The apparatus (350) for manufacturing plastic bags (330) according to claim 32, which comprises two feed lines (220) for two ports.

34. The combined welding/cutting tool (90) for manufacturing plastic bags (330) in the apparatus according to any one of claims 1 to 9, wherein the combined welding/cutting tool (90) comprises:
i.) a static, substantially planar lower tool plate (100),
ii.) a moveably, formed upper tool plate (110), and
iii) further is adapted to separate a plastic film (120,130), in portions, which correspond to one or more plastic bags (330).

35. A method for manufacturing plastic bags (330) wherein
i.) plastic films (120, 130) are dispensed from one or more film dispensers (340);
ii.) plastic elements (250) are provided from one or more port dispenser;
iii.) in a combined welding/cutting tool (90)
a) plastic elements (250) are attached to the plastic films (120,130);
b) wherein the plastic films (120,130) are welded together on a contour by a heat deposition and welding together the plastic films (120, 130) and welding together the plastic films (120,130) with the plastic elements (250); and
c) separating the plastic film (120, 130) together with the plastic elements (250);
iv.) re-welding the plastic elements (250) at a re-welding station (280); and
v.) collecting the plastic bags (330) on a transfer station (290).

36. The method according to claim 35, wherein the plastic film (120, 130) is substantially horizontally introduced by the combined welding/cutting tool (90) and/or fed through the combined welding/cutting tool (90).

37. The method according to any one of claims 35 and 36, wherein the plastic elements (250) are preheated before being attaching to the plastic bags (330) in the combined welding/cutting tool (90).

38. The method according to any one of claims 35 to 37, wherein one or more plastic films (120, 130) are printed.

39. The method according to any one of claims 35 to 38, wherein within the combined welding/cutting tool (90) 2 plastic elements (250) are mounted to 2 plastic bags (330) respectively.

40. The method according to any one of claims 35 to 39, wherein the plastic bags (330) are filled with a fluid (200).

41. The method according to any one of claims 35 to 40, wherein the plastic bags (330) are sealed.

42. The method according to any one of claims 35 to 41, wherein the plastic bags (330) are rotated with the ports rotated upwards before the filling station (300).

43. The method according to any one of claims 35 to 42, wherein the plastic bags (330) are packed into wrapper.

44. The method for manufacturing plastic bags (330) according to any one of claims 35 to 43, wherein the plastic film (120, 130)
i.) is guided over a static, substantially planar lower tool plate (100) of a combined welding/cutting tool (90); and
ii.) pressing a movable, moulded, upper tool plate (110) from above onto the plastic film (120, 130) for a cutting process.

45. The method for manufacturing plastic bags (330) according to any one of claims 35 to 43, with the combined welding/cutting tool (90), wherein two layers of plastic film (120, 130) become fused by compression of an upper tool plate (110) and a lower tool plate (100) wherein
i.) the lower tool plate (100) is brought to a first operating temperature that is below the softening temperature of the material or the materials of the plastic film (120, 130), and
ii.) the upper tool plate (110) is brought to a second operating temperature which is at least in portions of the upper tool plate (110) at least temporary above the softening temperature of the material or the materials of the plastic film (120, 130).

46. The method manufacturing plastic bags (330) according to claim 45, wherein the method comprises keeping the first temperature and/or the second temperature essentially constant

47. The method for manufacturing plastic bags (330) according to claim 46, wherein the first temperature is adjusted to between 90 °C to 110 °C.

48. The method for manufacturing plastic bags (330) according to any one of claims 45 to 47, wherein the second temperature is adjusted to between 120 °C to 140 °C.

49. The method for manufacturing plastic bags (330) according to any one of claims 45 to 48, wherein the first temperature is approximately adjusted to 100 °C to and the second temperature is approximately adjusted to 130 °C.

50. The method for manufacturing plastic bags (330) according to any one of claims 45 to 49, comprising a grip system (155) with a first gripper (160) and/or a second gripper (170), the second gripper (170) being passed by the at least partially closed combined gripping/welding tool (90), gripping one or more layers of plastic films (120,130) before the combined welding cutting tool (90), and introduces the one or more layers of plastic films (120,130) into the combined welding cutting tool (90).

## Revendications

1. Dispositif (350) de production de pochettes plastiques (330) en feuilles en matière plastique (120, 130) avec
i.) un ou plusieurs distributeurs de feuilles (340) pour la préparation de feuilles en matière plastique (120, 130)
ii.) un ou plusieurs distributeurs d'embouts pour la préparation d'éléments en matière plastique (250)
iii.) un outil de soudage/coupe combiné (90) pour
a) fixer les éléments en matière plastique sur les feuilles en matière plastique pour la formation de l'embout;
b) souder ensemble les feuilles en matière plastique au niveau d'une forme de soudure chauffée (40) et souder les feuilles en matière plastique (120, 130) aux éléments de matière plastique (250); et
c) séparer les feuilles en matière plastique (120,130) pour la formation de poches en matière plastique (330);
iv.) un autre outil de soudage (280) pour le resoudage de l'embout; et
v.) une station de transfert (290) pour la prise en charge de poches en matière plastique (330) pour le traitement ultérieur.

2. Dispositif (350) de production de poches en matière plastique selon la revendication 1, dans lequel l'alignement des feuilles en matière plastique (120,130) dans l'outil de soudage/coupe combiné (90) est essentiellement horizontal.

3. Dispositif (350) de production de poches en matière plastique (330) selon l'une des revendications 1 et 2, avec une station de réchauffage (270) pour les éléments en matière plastique (250).

4. Dispositif de production de poches en matières plastiques (330) selon l'une des revendications 1 à 3, le dispositif (350) comprenant une unité d'impression de feuilles (260).

5. Dispositif (350) de production de poches en matière plastique (330) selon l'une des revendications 1 à 4, dans lequel l'outil de soudage/coupe combiné (90) est agencé de manière à placer respectivement deux embouts sur deux poches en matière plastique (330) dans une phase de production.

6. Dispositif (350) de production de poches en matière plastique (330) selon l'une des revendications 1 à 5 avec une remplisseuse de poches (300) pour le remplissage de poches en matière plastique (330) avec un fluide (200).

7. Dispositif (350) de production de poches en matière plastique (330) selon la revendication 6, dans lequel la remplisseuse de poches (300) comprend
i.) un ou plusieurs dispositifs de remplissage (310) pour les poches en matière plastique (330) ;
ii.) un réservoir compensateur de pression (320) pour le fluide (200) ; et
iii.) une station de fermeture des poches

8. Dispositif (350) selon l'une des revendications 6 et 7, avec un dispositif de rotation à travers lequel les poches en matière plastique (330) peuvent être tournés avec les embouts vers le haut devant la remplisseuse de poches (300).

9. Dispositif (350) de production de poches en matière plastique (330) selon l'une des revendications 1 à 8 avec une machine d'emballage enveloppant pour l'emballage de poches en matière plastique (330) dans une enveloppe extérieure en matière plastique, la machine d'emballage enveloppant comprenant un ou plusieurs deuxièmes distributeurs de feuilles, pour la mise à disposition de feuilles enveloppantes en matière plastique.

10. Dispositif (350) de production de poches en matière plastique (330) dans un dispositif (350) selon l'une des revendications 1 à 9, l'outil de soudage/coupe combiné (90) comprenant
i.) une plaque outil inférieure, statique, essentiellement plate
ii.) une plaque outil supérieure (110), formée, mobile.

11. Dispositif de production (350) de poches en matière plastique (330) selon la revendication 10, dans lequel la plaque outil inférieure (100) comprend sur les surfaces (140, 150) de l'acier dur ou trempé.

12. Dispositif de production (350) de poches en matière plastique (330) selon l'une des revendications 10 et 11, dans lequel la plaque outil inférieure (100) comprend une ou plusieurs pièces rapportées (380).

13. Dispositif de production (350) de poches en matière plastique (330) selon la revendication 12, dans lequel la une ou plusieurs pièces rapportées (380) sont fabriquées en un autre matériau que celui de la plaque outil inférieure.

14. Dispositif de production (350) de poches en matière plastique (330) selon l'une des revendications 12 et 13, dans lequel les pièces rapportées (380) comprennent comme matériau de l'aluminium.

15. Dispositif de production (350) de poches en matière plastique (330) selon l'une des revendications 12 à 14, dans lequel les pièces rapportées (380) comprennent un chauffage séparé de la plaque outil inférieure (100).

16. Dispositif de production (350) de poches en matière plastique (330) selon l'une des revendications 12 à 15, dans lequel les pièces rapportées (380) sont plus chaudes en usage que la plaque outil inférieure (100).

17. Dispositif de production (350) de poches en matière plastique (330) selon l'une des revendications 10 à 15, dans lequel la plaque outil supérieure (110) du dispositif (350) comprend des dispositifs de séparation (80) pour une ou plusieurs couches de feuilles en matière plastique (120, 130), les dispositifs de séparation (80) étant plus mous que les surfaces (140, 150) de la plaque outil inférieure (100).

18. Dispositif de production (350) de poches en matière plastique (330) selon l'une des revendications 10 à 17, dans lequel la plaque outil supérieure (110) comprend une forme de soudage (40).

19. Dispositif de production (350) de poches en matière plastique (330) selon la revendication 18, dans lequel la forme de soudage (40) est fabriquée en aluminium.

20. Dispositif de production (350) de poches en matière plastique (330) selon l'une des revendications 18 et 19, dans lequel la forme de soudage (40) comprend un chauffage

21. Dispositif de production (350) de poches en matière plastique (330) selon l'une des revendications 17 à 20, dans lequel au moins un des dispositifs de séparation (80) est placé détachable au niveau de la plaque outil supérieure (110).

22. Dispositif (350) de production de poches en matière plastique (330) selon l'une des revendications 1 à 21 avec un outil de soudage/coupe combiné (90) pour la séparation et la jonction d'une ou plusieurs couches de feuilles en matière plastique (120, 130), dans lequel le dispositif (350) comprend un système de prise (155), le système de prise (155)
i.) pouvant être conduit le long de l'outil de soudage/coupe combiné fermé (90)
ii.) pouvant entraîner une ou plusieurs feuilles en matière plastique (120, 130) dans l'outil de soudage/coupe ouvert

23. Dispositif (350) de production de feuilles en matière plastique (330) selon la revendication 22, dans lequel le système de prise (155) comprend une première prise (160).

24. Dispositif (350) de production de feuilles en matière plastique (330) selon l'une des revendications 22 ou 23, dans lequel le système de prise (155) comprend une deuxième prise (170).

25. Dispositif (350) de production de feuilles en matière plastique (330) selon l'une des revendications 22 ou 23, dans lequel la première prise (160) passe le long d'un côté et/ou la deuxième prise (170) passe le long d'un autre côté de l'outil de soudage/coupe combiné (90).

26. Dispositif (350) de production de poches en matière plastique (330) selon l'une des revendications 22 à 25, dans lequel la première prise (160) et/ou la deuxième prise (170) sont façonnées comme des prises mécaniques, la première prise (160) et la deuxième prise (170) pouvant saisir une ou plusieurs couches de feuilles en matière plastique (120, 130).

27. Dispositif (350) de production de poches en matière plastique (330) selon l'une des revendications 22 à 26, dans lequel l'outil de soudage/coupe combiné (90) comprend des évidements, de sorte que l'outil de soudage/coupe combiné (90) peut être fermé pendant que la première prise (160) et/ou la deuxième prise (170) soutiennent une ou plusieurs couches de feuilles en matière plastique (120, 130) dans la zone interne de l'outil de soudage/coupe combiné (90).

28. Dispositif (350) de production de poches en matière plastique (330) selon l'une des revendications 1 à 9, qui comprend des cavités (180), les cavités (180)
i.) pouvant soutenir des poches en matière plastique (330), qui sont fabriquées après passage d'une ou plusieurs feuilles en matière plastique (120, 130) via l'outil de soudage/coupe combiné (90) et
ii.) le dispositif (350) étant construit de sorte que les cavités (180) peuvent soutenir les poches en matière plastique (330) jusqu'à une étape de transfert (290).

29. Dispositif (350) de production de poches en matière plastique selon la revendication 28, dans lequel
i.) les poches ne matière plastique (330) sont prévues avec des embouts et
ii.) les cavités (180) sont disposées de sorte qu'elles peuvent saisir les poches en matière plastique (330) dans la zone des embouts.

30. Dispositif (350) de production de poches en matière plastique (330) selon l'une des revendications 1 à 9, dans lequel
i.) les éléments en matière plastique (250) sont amenés dans les cavités (180) ;
ii.) les éléments en matière plastique (250) situés dans les cavités (180) sont transportés à l'outil de soudage/coupe combiné (90) ;
iii.) les éléments en matière plastique (250) restent dans les cavités (180) durant l'étape de soudage/coupe ; et
iv.) les poches en matière plastique (330) apportées aux éléments en matière plastique (250) avec les cavités sont sorties de l'outil de soudage/coupe (90).

31. Dispositif (350) de production de poches en matière plastique (330) selon l'une des revendications 1 à 9, comprenant en outre une station de remplissage (300) pour le remplissage de poches en matière plastique (330), comprenant au moins deux embouts, dans lequel la station de remplissage (300)
i.) comprend une soupape de réglage (190) et
ii.) un fluide (200) est distribué immédiatement depuis la pièce (210) de la soupape de réglage (190) au niveau de conduites d'alimentation (220) aux au moins deux embouts.

32. Dispositif (350) selon la revendication 31, dans lequel la soupape de réglage (190) comprend une membrane (235), pour la fermeture de toutes les ouvertures de conduites d'alimentation dans les conduites d'alimentation (220).

33. Dispositif (350) de production de poches en matière plastique (330) selon la revendication 32, lequel comprend deux conduites d'alimentation (220) pour deux embouts.

34. Outil de soudage/coupe combiné (90) pour la production de poches en matière plastique (330) dans un dispositif (350) selon l'une des revendications 1 à 9, dans lequel l'outil de soudage/coupe combiné (90) comprend
i.) une plaque outil inférieure (100) statique, essentiellement plate
ii.) une plaque outil supérieure (110) formée mobile
et
iii.) une feuille en matière plastique (120, 130), découpée en sections, lesquelles correspondent à une ou une pluralité de poches en matière plastiques (330).

35. Procédé de production de poches en matière plastique (330), dans lequel
i.) des feuilles en matière plastique (120, 130) sont prélevées d'un ou plusieurs distributeurs de feuilles (340) ;
ii.) des éléments en matière plastique (120, 130) sont mis à la disposition d'un ou plusieurs distributeurs d'embouts ;
iii.) dans un outil de soudage/coupe combiné (90)
a) des éléments en matière plastique (250) sont joints aux feuilles en matière plastique (120, 130) ;
b) les feuilles en matière plastique (120, 130) sont soudées sur un contour par alimentation/apport thermique et les feuilles en matière plastique (120, 130) sont soudées aux éléments en matière plastique (250) ; et
c) les feuilles en matière plastique (120, 130) sont séparées des éléments en matière plastique (250) ;
iv.) les éléments en matière plastique (250) sont re-soudés à une station de resoudage (280) ; et
v.) les poches en matière plastique (330) sont prises en charge à une station de transfert.

36. Procédé selon la revendication 35, dans lequel la feuille en matière plastique (120, 130) est engagée essentiellement horizontalement à travers l'outil de soudage/coupe combiné (90) et/ou conduite à travers l'outil de soudage/coupe combiné (90).

37. Procédé selon l'une des revendications 35 à 36, dans lequel les éléments en matière plastique (250) sont préchauffés avant d'être placés au niveau des poches en matière plastique (330) dans l'outil de soudage/coupe combiné (90).

38. Procédé selon l'une des revendications 35 à 37, dans lequel une ou plusieurs feuilles en matière plastique (120, 130) sont imprimées.

39. Procédé selon l'une des revendications 35 à 38, dans lequel respectivement deux éléments en matière plastique (250) sont placés sur deux poches en matière plastique (330) dans l'outil de soudage/coupe combiné (90).

40. Procédé selon l'une des revendications 35 à 39, dans lequel les poches en matière plastique (330) sont remplies (330) avec un fluide (200).

41. Procédé selon l'une des revendications 35 à 40, dans lequel les poches en matière plastique (330) sont scellées.

42. Procédé selon l'une des revendications 35 à 41, dans lequel les poches en matière plastique (330) sont tournées avec les embouts vers le haut avant l'étape de remplissage (300).

43. Procédé selon l'une des revendications 35 à 42, dans lequel les poches en matière plastique (330) sont emballées dans un emballage enveloppant.

44. Procédé de production de poches en matière plastique (330) selon l'une des revendications 35 à 43, dans lequel les feuilles en matière plastique (120, 130)
i.) sont conduites au dessus d'une plaque inférieure (100) statique, essentiellement plate, d'un outil de soudage/coupe combiné (90) et
ii.) une plaque outil supérieure (110), formée, mobile, appuie, du haut, sur les feuilles en matière plastique pour le processus de coupe.

45. Procédé de production de poches en matière plastique (330) selon l'une des revendications 35 à 43, avec un outil de soudage/coupe combiné (90), dans lequel deux couches de feuilles en matière plastique (120, 130), sont reliées, en pressant une plaque outil supérieure (110) et une plaque outil inférieure (100), dans lequel
i.) la plaque outil inférieure (100) est amenée à une première température en usage qui se situe sous la température d'amollissement de la matière ou des matières des feuilles en matière plastique (120, 130) et
ii.) la plaque outil supérieure (110) est amenée à une deuxième température en usage qui, au moins dans des sections de la plaque supérieure (110), se situe au moins temporairement au-dessus de la température d'amollissement de la matière ou des matières des feuilles en matière plastique (120, 130).

46. Procédé de production de poches en matière plastique (330) selon la revendication 45, dans lequel la première température et/ou la deuxième température sont maintenues essentiellement constantes pendant le procédé.

47. Procédé de production de poches en matière plastique (330) selon la revendication 46, dans lequel la première température est réglée entre 90°C et 110°C.

48. Procédé de production de poches en matière plastique (330) selon l'une des revendications 45 à 47, dans lequel la deuxième température est réglée entre 120°C et 140°C.

49. Procédé de production de feuilles en matière plastique (330) selon l'une des revendications 45 à 48, dans lequel la première température est réglée sur environ 100°C et la deuxième température sur environ 130°C.

50. Procédé de production de poches en matière plastique (330) selon l'une des revendications 45 à 49, dans lequel un système de prise (155) avec une première prise (160) et/ou une deuxième prise (170) passe à côté de l'outil de soudage/coupe combiné au moins partiellement fermé (90), saisit une ou plusieurs couches de feuilles en matière plastique (120, 130) devant l'outil de soudage/coupe combiné (90) et conduit dans l'outil de soudage/coupe combiné (90) après ouverture de l'outil de soudage/coupe combiné (90).
